# EUROPEAN PATENT APPLICATION

(11) **EP 4 793 735 A1**
(43) Date of publication of application: **19.08.2026**
(21) Application number: 24894407.6
(22) Date of filing: 28.10.2024
(51) Int. Cl.: G06F 1/16

(54) **FOLDABLE ELECTRONIC DEVICE INCLUDING WATERPROOF STRUCTURE**

(30) Priority: 20.11.2023 KR 20230160976; 26.12.2023 KR 20230191452
(71) Applicant: Samsung Electronics Co., Ltd., Suwon-si, Gyeonggi-do 16677 (KR)
(72) Inventor: YANG, Soonwoong, Suwon-si, Gyeonggi-do 16677 (KR); SON, Kwonho, Suwon-si, Gyeonggi-do 16677 (KR); KIM, Gyeongtae, Suwon-si, Gyeonggi-do 16677 (KR); SEOK, Sangyoup, Suwon-si, Gyeonggi-do 16677 (KR); LEE, Seunghoon, Suwon-si, Gyeonggi-do 16677 (KR)
(74) Representative: Gulde & Partner
(86) International application number: PCT/KR2024/016497
(87) International publication number: WO 2025/110513

(57) **Abstract**

The present document discloses a foldable electronic device including, a first housing that includes through-holes, at least a portion of which is formed to be inclined; a second housing that is rotatably connected to the first housing; a first display that is disposed on a first surface of the first housing; a second display that is disposed on a second surface of the first housing; a first waterproof member that overlaps at least a portion of the through-holes; a second waterproof member that is spaced apart from the first waterproof member and overlaps at least a portion of the through-holes; and a third waterproof member that is filled in the through-holes to connect the first waterproof member and the second waterproof member.

## Description

### [Technical Field]

An embodiment of the disclosure relates to a foldable electronic device that includes a waterproof structure.

### [Background Art]

A portable electronic device, such as a smartphone, may provide various functions as well as a call function based on various types of applications, and in a process of providing various functions, the portable electronic device may output a screen corresponding to the functions. When the user uses the above-described various functions, the user may want to use a wider screen. However, when the display device becomes larger for display a screen in a general portable electronic device, an overall size thereof increases, so that portability may deteriorate. Accordingly, a foldable portable electronic device has been developed so that the size of the screen may be increased while maintaining portability. A foldable electronic device may require a sealed waterproof and/or dustproof structure for preventing damage to electronic components that are disposed in an interior space due to moisture and/or foreign substances introduced from outside.

### [Disclosure]

### [Technical Problem]

### [Technical Solution]

A foldable electronic device according to at least one embodiment of the disclosure (or a portable electronic device, a portable communication device, a foldable electronic device, or a foldable electronic device having a communication function) may include a first housing 210 that includes a through-hole 810 and 1010, at least a portion of which is formed to be inclined, a second housing 220 that is rotatably connected to the first housing 210, a first display 240 that is disposed on a first surface 211 of the first housing 210, a second display 340 that is disposed on a second surface 212 of the first housing 210, a first waterproof member 410 that is disposed between the second surface 212 of the first housing 210 and the second display 340 and overlaps at least a portion of the through-hole 810 and 1010 when the first display 240 is viewed from above (or when viewed from the z-axis or -z-axis direction), a second waterproof member 420 that is disposed between the second surface 212 of the first housing 210 and the second display 340 to be spaced apart from the first waterproof member 410 and overlaps at least a portion of the through-hole 810 and 1010 when the first display 240 is viewed from above (or when viewed from the z-axis or -z-axis direction), and a third waterproof member 430 that is filled in the through-hole 810 and 1010 to connect the first waterproof member 410 and the second waterproof member 420.

An electronic device according to an embodiment disclosed in the disclosure may include a housing 210 that includes a through-hole 810 and 1010, at least a portion of which is formed to be inclined, a display 340 that is disposed in the housing 210, and a waterproof structure 400 that is disposed between the housing 210 and the display 340, wherein the waterproof structure 400 may include a first waterproof member 410 in a form of an open loop, a second waterproof member 420 in a form of an open loop that is disposed at an opened portion of the first waterproof member 410, and a third waterproof member 430 that is filled in the through-hole 810 and 1010 and connects the first waterproof member 410 and the second waterproof member 420.

### [Advantageous Effects]

### [Description of Drawings]

FIG. 1 illustrates an unfolded state of an electronic device according to an embodiment of the disclosure.
FIG. 2 illustrates a folded state of an electronic device according to an embodiment of the disclosure.
FIG. 3 is an exploded perspective view of an electronic device according to an embodiment of the disclosure.
FIG. 4 is an exploded perspective view illustrating an electronic device including a waterproof structure according to an embodiment of the disclosure.
FIG. 5A is a plan view illustrating a first waterproof structure of an electronic device according to an embodiment of the disclosure, and FIG. 5B is a cross-sectional view illustrating the electronic device including the first waterproof structure, taken along line A-A'.
FIG. 6 is a plan view illustrating a rear surface of a sub-display according to an embodiment of the disclosure.
FIG. 7 is a cross-sectional view illustrating the sub-display, taken along line B-B', in FIG. 6.
FIG. 8A is a plan view illustrating a partial area of an electronic device including a first waterproof member, a second waterproof member, and a third waterproof member according to an embodiment of the disclosure, FIG. 8B is a cross-sectional view illustrating the electronic device, taken along line C-C' of FIG. 8A, and FIG. 8C is a cross-sectional view illustrating the electronic device, taken along line D-D' of FIG. 8A.
FIG. 9 illustrates a method for assembling an electronic device including a third waterproof member according to an embodiment of the disclosure.
FIG. 10 illustrates an electronic device having a speaker hole and a through-hole according to an embodiment of the disclosure.
FIG. 11 illustrates a method for assembling an electronic device including a third waterproof member according to an embodiment of the disclosure.
FIG. 12 is a view illustrating an electronic device including a bonding member according to an embodiment of the disclosure.
FIG. 13 is a view illustrating an electronic device including a bonding member according to an embodiment of the disclosure.
FIG. 14 is a view illustrating an electronic device including a second through-hole according to an embodiment of the disclosure.
FIG. 15 is a view illustrating an electronic device including a second through-hole according to an embodiment of the disclosure.
FIG. 16A is an exploded perspective view of a main display according to an embodiment, and FIG. 16B is a view illustrating some layers illustrated in FIG. 16A in detail.
FIGS. 17A to 17E are views for explaining a method for assembling an electronic device according to an embodiment of the disclosure.

### [Mode for Invention]

Hereinafter, an embodiment of the disclosure may be described with reference to accompanying drawings.

An embodiment of the disclosure described below provides an electronic device, as a foldable electronic device, that may support a waterproof and/or dustproof structure of a sub-display.

Furthermore, an embodiment of the disclosure provides an electronic device that may reduce a black area of a sub-window, as a waterproof structure that overlaps a main display is disposed between a sub-display and a first housing when the main display is viewed from a top (or when viewed from the z-axis or -z-axis direction).

Furthermore, an embodiment of the disclosure provides an electronic device that may expand a transparent area of a sub-window corresponding to an active area of a sub-display by reducing a black area of the sub-window.

Furthermore, an embodiment of the disclosure provides an electronic device that may reduce a size and a weight of a sub-window by reducing a black area of the sub-window.

In addition, various objectives and effects provided by a foldable electronic device according to an embodiment of the disclosure may be mentioned according to embodiments of the detailed description.

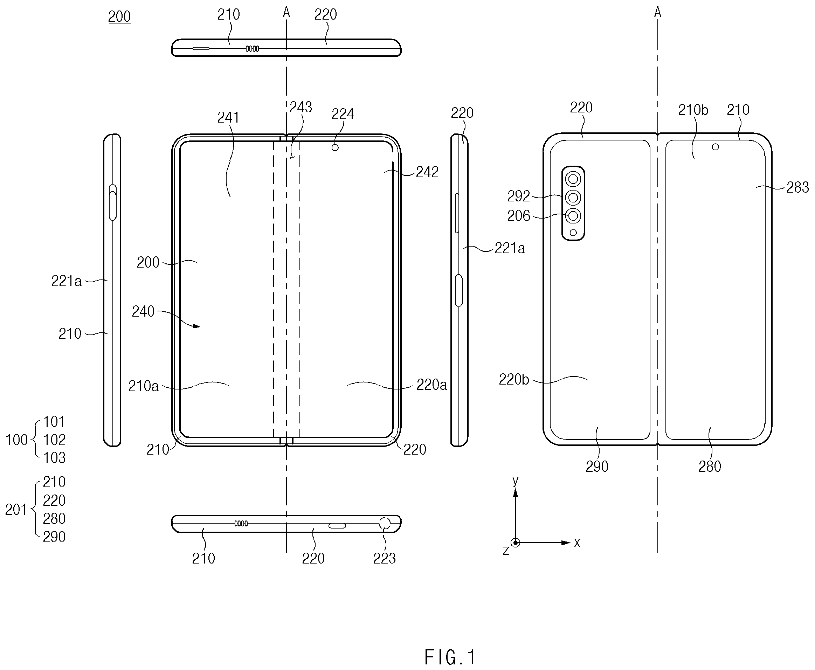

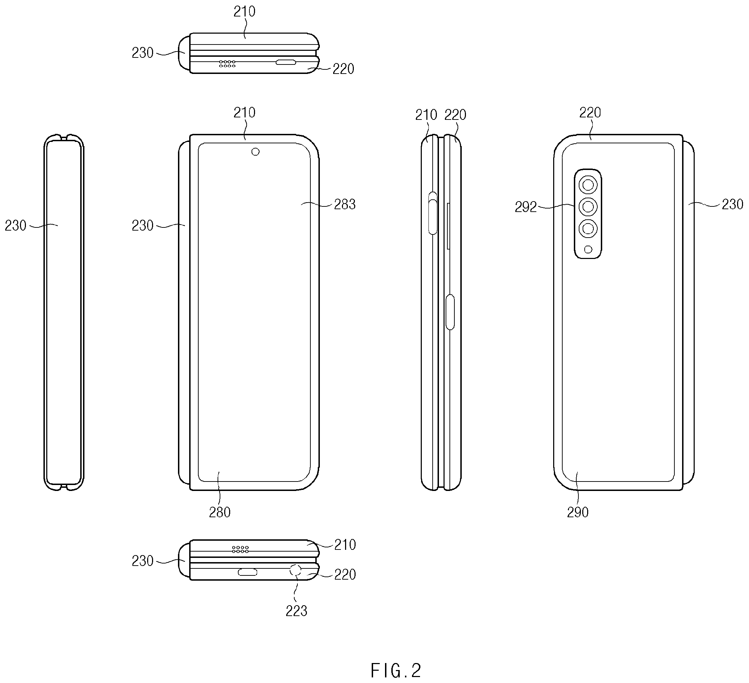

FIG. 1 illustrates an unfolded state of an electronic device according to an embodiment of the disclosure. FIG. 2 illustrates a folded state of an electronic device according to an embodiment of the disclosure.

Referring to FIGS. 1 and 2, in an embodiment, an electronic device 200 may include a housing 201, a hinge cover 230 that covers a foldable portion of the housing 201, and a flexible or foldable display 240 (hereinafter, briefly referred to as a "display" 240) that is disposed in a space formed by the housing 201. According to an embodiment, a surface, on which the display 240 is disposed, is defined as a front surface (e.g., a first front surface 210a and a second front surface 220a) of the electronic device 200. Furthermore, an opposite surface to the front surface is defined as a rear surface (e.g., a first rear surface 210b and a second rear surface (220b)) of the electronic device 200. Furthermore, a surface that surrounds a space between the front surface and the rear surface is defined as a side surface (e.g., a first side surface 211a and a second side surface 221a) of the electronic device 200.

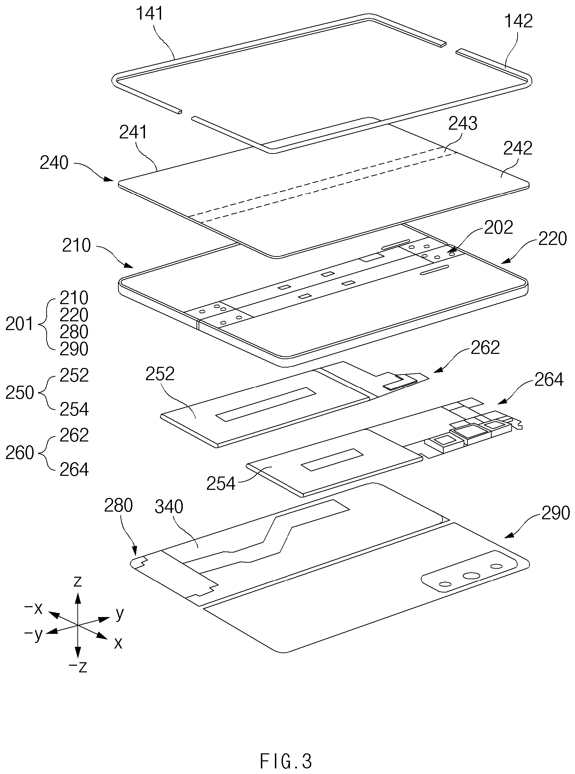

According to an embodiment, the housing 201 may include a first housing 210, a second housing 220 that is rotatably or pivotally coupled to the first housing 210, a first rear cover 280, a second rear cover 290, and a hinge module (e.g., a hinge module 202 of FIG. 3). The hinge module 202 may provide at least one folding axis A that is a center of rotation of the first housing 210 and/or the second housing 220. The housing 201 of the electronic device 200 may not be limited to the shape and connection illustrated in FIGS. 2 and 3, and may be implemented in another shape or by a combination and/or connection of other components. For example, in an embodiment, the first housing 210 and the first rear cover 280 may be integrally formed, and the second housing 220 and the second rear cover 290 may be integrally formed. According to an embodiment, the first housing 210 may include a first front surface 210a that is connected to a hinge module (e.g., the hinge module 202 of FIG. 3) and faces a first direction, and a first rear surface 210b that faces a second direction that is opposite to the first direction. According to an embodiment, the second housing 220 may include a second front surface 220a that is connected to the hinge module 202 and faces a third direction, and a second rear surface 220b that faces a fourth direction that is opposite to the third direction, and may be rotated about the hinge module 202 with respect to the first housing 210. Accordingly, the electronic device 200 may be changed into a folded state or an unfolded state. In the electronic device 200, in the folded state, the first front surface 210a may face the second front surface 220a, and in the unfolded state, the third direction may be substantially parallel to the first direction. Hereinafter, unless separately mentioned, directions will be described with reference to an unfolded state of the electronic device 200.

According to an embodiment, the first housing 210 and the second housing 220 may be positioned on opposite sides about a folding axis A and may have an overall symmetrical shape about the folding axis A. As will be described later, the first housing 210 and the second housing 220 may vary in an angle formed therebetween or a distance therebetween, depending on whether a state of the electronic device 200 is an unfolded state, a folded state, or an intermediate state. According to an embodiment, the second housing 220 further includes a sensor area 224, in which various sensors (e.g., a front camera) are disposed, unlike the first housing 210, but may have a shape that is symmetrical to the first housing 210 in the other areas. According to an embodiment, the folding axis A may be a plurality (e.g., two) of parallel folding axes. In the disclosure, the folding axis A is provided along a lengthwise direction (the Y-axis direction) of the electronic device 200, but a direction of the folding axis A is not limited thereto. As an example, depending on an external design or a user's usage habit, the electronic device 200 may be understood to include the folding axis A that extends along a widthwise direction (e.g., the X-axis direction).

According to an embodiment, the electronic device 200 may include a structure, into which a digital pen may be inserted. As an example, a hole 223, into which the digital pen may be inserted, may be formed on a side surface of the first housing 210 of the electronic device 200 or on a side surface of the second housing 220.

According to an embodiment, at least part of the first housing 210 and the second housing 220 may be formed of a metal material or a nonmetal material having rigidity of a magnitude selected to support the display 240. At least a portion formed of the metal material may provide a ground plane of the electronic device 200, and may be electrically connected to a ground conductor provided in a printed circuit board (e.g., a board part 260 of FIG. 3).

According to an embodiment, the sensor area 224 may be formed to have a specific area adjacent to one side corner of the second housing 220. However, an arrangement, a shape, and a size of the sensor area 224 are not limited to the illustrated example. As an example, in an embodiment, the sensor area 224 may be provided in another corner of the second housing 220, or an arbitrary area between an upper end corner and a lower end corner of the second housing 220, or the first housing 210. According to an embodiment, components for performing various functions embedded in the electronic device 200 may be visually exposed to a front surface of the electronic device 200 through the sensor area 224, or through one or more openings that are provided in the sensor area 224. In an embodiment, the components may include various types of sensors. The sensors may include, for example, at least one of a front camera, a receiver, or a proximity sensor.

According to an embodiment, the first rear cover 280 may be disposed on one side of a rear surface of the electronic device 200 with respect to the folding axis A, and may have, for example, a substantially rectangular periphery, and the periphery may be surrounded by the first housing 210. Similarly, the second rear cover 290 may be disposed on another side of a rear surface of the electronic device 200 with respect to the folding axis A, and a periphery thereof may be surrounded by the second housing 220.

According to an embodiment, the first rear cover 280 and the second rear cover 290 may have shapes that are substantially symmetrical to each other with respect to the folding axis A. However, the first rear cover 280 and the second rear cover 290 do not necessarily have shapes that are symmetrical to each other, and, in an embodiment, the electronic device 200 may include the first rear cover 280 and the second rear cover 290 that have various shapes.

According to an embodiment, the first rear cover 280, the second rear cover 290, the first housing 210, and the second housing 220 may form a space, in which various components of the electronic device 200 (e.g., a printed circuit board or a battery) may be disposed. According to an embodiment, one or more components of the electronic device 200 may be disposed on a rear surface of the electronic device 200 or may be visually exposed. As an example, at least a portion of a sub-display (e.g., a sub-display 244 of FIG. 3) may be visually exposed through a first rear area 283 of the first rear cover 280. In an embodiment, one or more components or sensors may be visually exposed through a second rear area 292 of the second rear cover 290. In an embodiment, the sensors may include a proximity sensor and/or a camera module 206 (e.g., a rear camera).

According to an embodiment, a front camera that is visually exposed to a front surface of the electronic device 200 through one or more openings provided in the sensor area 224, or a camera module 206 that is visually exposed through the second rear area 292 of the second rear cover 290, may include one or more lenses, an image sensor, and/or an image signal processor. In an embodiment, two or more lenses (e.g., an infrared camera, a wide-angle lens, and a telephoto lens) and image sensors may be disposed on one surface of the electronic device 200.

Referring to FIG. 2, the hinge cover 230 may be disposed between the first housing 210 and the second housing 220, and may be configured to cover internal components (e.g., a hinge module 202 of FIG. 3). According to an embodiment, the hinge cover 230 may be covered by a part of the first housing 210 and the second housing 220, or may be exposed to an outside, depending on a state of the electronic device 200 (a flat state or a folded state). As an example, in a flat state, the hinge cover 230 may be substantially covered by the first housing 210 and the second housing 220, and, in a folded state, most of an outer surface of the hinge cover 230 may be exposed to an outside.

According to an embodiment, as illustrated in FIG. 1, when the electronic device 200 is in a flat state, the hinge cover 230 may be covered by the first housing 210 and the second housing 220, and may not be exposed. As an example, as illustrated in FIG. 2, when the electronic device 200 is in a folded state (e.g., a fully folded state), the hinge cover 230 may be exposed to an outside between the first housing 210 and the second housing 220. As an example, in an intermediate state, in which the first housing 210 and the second housing 220 are folded with a certain angle, the hinge cover 230 may be partially exposed to an outside between the first housing 210 and the second housing 220. However, in this case, an exposed area may be smaller than that in a fully folded state. In an embodiment, the hinge cover 230 may include a curved surface.

According to an embodiment, the display 240 may be disposed on a space that is formed by the housing 201. As an example, the display 240 may be seated on a recess that is formed by the housing 201, and may constitute most of a front surface of the electronic device 200. Accordingly, a front surface of the electronic device 200 may include the display 240, and partial areas of the first housing 210 and the second housing 220 that are adjacent to the display 240. And, a rear surface of the electronic device 200 may include the first rear cover 280, a partial area of the first housing 210 that is adjacent to the first rear cover 280, the second rear cover 290, and a partial area of the second housing 220 that is adjacent to the second rear cover 290.

According to an embodiment, the display 240 may refer to a display, at least a partial area of which may be transformed into a planar shape or a curved shape. According to an embodiment, the display 240 may include a folding area 243, a first display area 241 that is disposed on one side (e.g., a left side of the folding area 243 illustrated in FIG. 1) with respect to the folding area 243, and a second display area 242 that is disposed on the other side (e.g., a right side of the folding area 243 illustrated in FIG. 1).

However, a division of areas of the display 240 is illustrative, and the display 240 may be divided into a plurality of areas (for example, four or more or two) depending on a structure or a function. As an example, in the embodiment illustrated in FIG. 1, areas of the display 240 may be divided by the folding area 243 that extends parallel to the Y axis or by the folding axis A, but the display 240 may be divided into areas with respect to another folding area (e.g., a folding area that is parallel to the X axis) or another folding axis (e.g., a folding axis that is parallel to the X axis). According to an embodiment, the display 240 may be coupled to, or disposed adjacent to, a touch sensing circuit, a pressure sensor that is configured to measure an intensity (pressure) of a touch, and/or a digitizer (not illustrated) that is configured to detect a magnetic-field-type stylus pen.

According to an embodiment, the first display area 241 and the second display area 242 may have shapes that are entirely symmetrical to each other with respect to the folding area 243. According to an embodiment (not illustrated), the second display area 242, unlike the first display area 241, may include a cut notch depending on a presence of the sensor area 224, but may have a shape that is symmetrical to the first display area 241 in other areas. In other words, the first display area 241 and the second display area 242 may include portions that have symmetrical shapes and portions that have asymmetrical shapes.

Hereinafter, operations of the first housing 210 and the second housing 220, and areas of the display 240, according to a state of the electronic device 200 (e.g., a flat state, or an unfolded state, and a folded state) will be described.

According to an embodiment, when the electronic device 200 is in a flat state (e.g., FIG. 2), the first housing 210 and the second housing 220 may form an angle of substantially 180 degrees, and the first display area 241 and the second display area 242 may be disposed to face substantially the same direction. For example, in the flat state, a surface of the first display area 241 and a surface of the second display area 242 may form 180 degrees with respect to each other, and may face the same direction (e.g., a forward direction of the electronic device). The folding area 243 may form the same plane as the first display area 241 and the second display area 242.

According to an embodiment, when the electronic device 200 is in a folded state (e.g., FIG. 3), the first housing 210 and the second housing 220 may be disposed to face each other. A surface of the first display area 241 of the display 240 and a surface of the second display area 242 may form a narrow angle with respect to each other (e.g., between 0 degrees and 10 degrees), and may substantially face each other. At least a portion of the folding area 243 may be formed as a curved surface having a certain curvature.

According to an embodiment, when the electronic device 200 is in an intermediate state (folded state) (e.g., FIG. 3), the first housing 210 and the second housing 220 may be disposed at a certain angle with respect to each other. A surface of the first display area 241 of the display 240 and a surface of the second display area 242 may form an angle that is larger than that in the folded state and smaller than that in the flat state. At least a portion of the folding area 243 may be formed as a curved surface having a specific curvature, and the curvature then may be smaller than that in the folded state.

FIG. 3 is an exploded perspective view of an electronic device according to an embodiment of the disclosure.

Referring to FIG. 3, an electronic device (e.g., the electronic device 200 of FIGS. 1 and 2) may include a housing 201, a display 240, a hinge module 202, a battery 250, and a board part 260. The housing 201 may include a first housing 210, a second housing 220, a first rear cover 280, and a second rear cover 290.

According to an embodiment, the housing 201 may include a first housing 210, a second housing 220, a hinge cover 230, a first rear cover 280, and a second rear cover 290. Configurations of the first housing 210, the second housing 220, the hinge cover 230, the first rear cover 280, and the second rear cover 290 of FIG. 3 may be identical to all or a portion of configurations of the first housing 210, the second housing 220, the hinge cover 230, the first rear cover 280, and the second rear cover 290 of FIG. 1 and/or FIG. 2. In an embodiment, a hinge module 202 may be disposed in an interior of the housing 201, such that the hinge module 202 may rotatably connect the first housing 210 and the second housing 220.

According to an embodiment, the first housing 210 and the second housing 220 may be assembled to each other such that the first housing 210 and the second housing 220 are coupled to opposite sides of the hinge module 202. According to an embodiment, the first housing 210 may accommodate components (e.g., a first circuit board 262 and/or a first battery 252) of the electronic device 200. According to an embodiment, the second housing 220 may accommodate components (e.g., a second circuit board 264 and/or a second battery 254) of the electronic device 200.

According to an embodiment, a main display 240 (or, a first display) may include a first display area 241, a second display area 242, and a folding area 243. Configurations of the first display area 241, the second display area 242, and the folding area 243 of FIG. 3 may be identical to all or a portion of configurations of the first display area 241, the second display area 242, and the folding area 243 of FIG. 1 and/or FIG. 2.

According to an embodiment, a sub-display 340 may display a screen in a direction different from directions of the display areas 241 and 242. For example, the sub-display 340 may output a screen in an opposite direction to the first display area 241. According to an embodiment, the sub-display 340 may be disposed on the first rear cover 280.

According to an embodiment, the battery 250 may include a first battery 252 that is disposed in the first housing 210 and a second battery 254 that is disposed in the second housing 220. According to an embodiment, the first battery 252 may be disposed on a first circuit board 262 (or, a first printed circuit board (PCB)), and the second battery 254 may be disposed on a second circuit board 264.

According to an embodiment, a board part 260 may include a first circuit board 262 that is disposed in the first housing 210 and a second circuit board 264 that is disposed in the second housing 220 (or, a second printed circuit board). According to an embodiment, the board part 260 may include at least one flexible printed circuit board (FPCB) for electrically connecting the first circuit board 262 and the second circuit board 264 (not illustrated). According to an embodiment, at least a portion of the flexible printed circuit board (not illustrated) may be disposed across the hinge module 202. According to an embodiment, the first circuit board 262 and the second circuit board 264 may be disposed in an interior of a space that is formed by the first housing 210, the second housing 220, the first rear cover 280, and the second rear cover 290. Components for implementing various functions of the electronic device 200 may be disposed on the first circuit board 262 and the second circuit board 264.

According to an embodiment, the electronic device 200 may include a first decorative member 141 that is coupled along a periphery of the first housing 210, and a second decorative member 142 that is coupled along a periphery of the second housing 220. The first decorative member 141 and/or the second decorative member 142 may be formed of a metal material or a polymer material.

According to an embodiment, the flexible display 240 may be located such that a periphery of the first display area 241 is interposed between the first housing 210 and the first decorative member 141. A periphery of the first display area 241 may be protected by the first decorative member 141. The flexible display 240 may be located such that a periphery of the second display area 242 is interposed between the second housing 220 and the second decorative member 142. A periphery of the second display area 242 may be protected by the second decorative member 142.

In the following detailed description, a configuration, in which the first housing 210 and the second housing 220 are rotatably connected or coupled by a hinge module (or, referred to as a "hinge structure"), may be exemplified. However, it should be noted that such an embodiment does not limit an electronic device according to an embodiment of the disclosure. For example, an electronic device according to an embodiment of the disclosure may include three or more housings, and a "pair of housings" in embodiments disclosed below may refer to two housings that are rotatably coupled to each other among three or more housings.

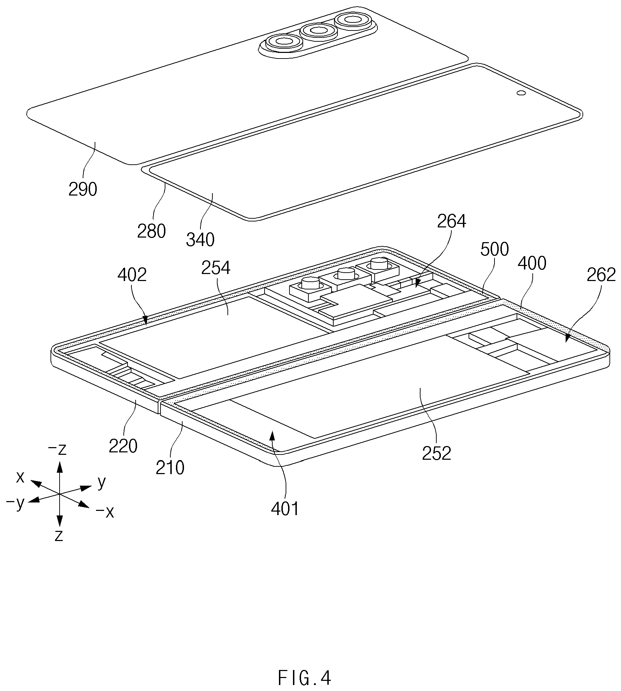

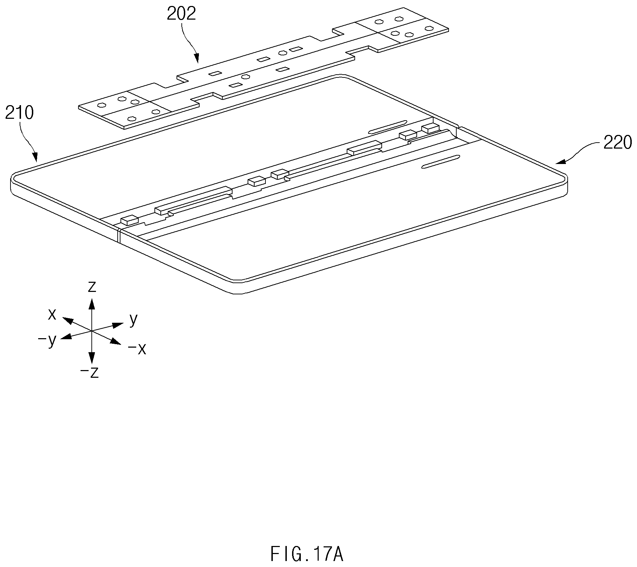

Hereinafter, with reference to FIGS. 4 to 17E, a waterproof structure of an electronic device according to an embodiment will be described. In describing embodiments of FIGS. 4 to 17E, the electronic device 200 of an embodiment illustrated in FIGS. 1 to 3 may be referred to, and configurations that are similar to or identical to those of the embodiment illustrated in FIGS. 1 to 3 may be denoted by the same reference numerals or may be omitted, and detailed descriptions thereof may also be omitted.

FIG. 4 is an exploded perspective view illustrating an electronic device including a waterproof structure according to an embodiment of the disclosure.

Referring to FIG. 4, according to an embodiment, an electronic device may include a first housing 210, a second housing 220, a sub-display 340, a first rear cover 280, a second rear cover 290, a first waterproof structure 400, and a second waterproof structure 500. The first waterproof structure 400 and the second waterproof structure 500 may be formed to protect an interior of the electronic device from external moisture, humidity, and/or foreign substances.

The first waterproof structure 400 may be disposed in a form of a closed loop between the first housing 210 and the sub-display 340. The first waterproof structure 500 may form at least one first waterproof space 401 between the first housing 210 and the sub-display 340 in a closed form. At least any one of electronic components (e.g., a camera module) disposed on the first printed circuit board 262 and the first battery 252 may be disposed in the first waterproof space 401. At least any one of electronic components disposed on the first printed circuit board 262 and the first battery 252 may be disposed in the first waterproof space 401 that is formed to be sealed by the first waterproof structure 400, to be protected from external moisture, humidity, and/or foreign substances.

The second waterproof structure 500 may be disposed in a form of a closed loop between the second housing 220 and the second rear cover 290. The second waterproof structure 500 may form at least one second waterproof space 250 between the second housing 220 and the second rear cover 290 in a closed form. At least any one of electronic components (e.g., a camera module) disposed on the second printed circuit board 264 and the second battery 254 may be disposed in the second waterproof space 402. At least any one of electronic components disposed on the second printed circuit board 264 and the second battery 254 may be disposed in the second waterproof space 402 that is formed to be sealed by the second waterproof structure 500, to be protected from external moisture, humidity, and/or foreign substances.

According to an embodiment, at least any one of the first waterproof structure 400 and the second waterproof structure 500 may be formed to pass via a stepped area (or, an area having a height difference). At least any one of the first waterproof structure 400 and the second waterproof structure 500 may include a plurality of waterproof members, to be formed in a form of a closed loop even in the stepped area. Hereinafter, a first waterproof structure 400 including a plurality of waterproof members will be described.

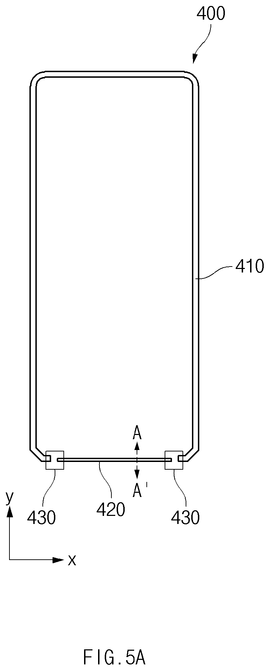

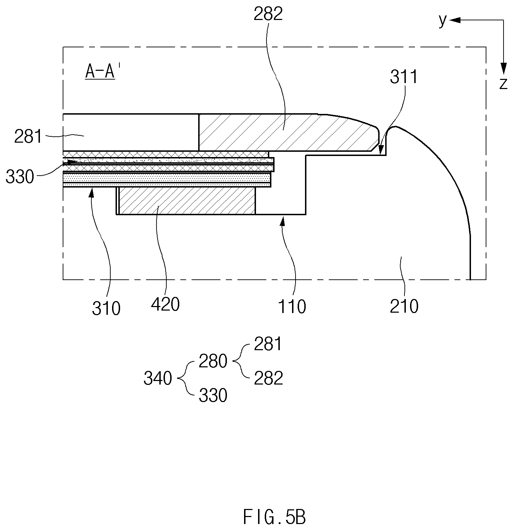

FIG. 5A is a plan view illustrating a first waterproof structure of an electronic device according to an embodiment of the disclosure, and FIG. 5B is a cross-sectional view illustrating the electronic device including the first waterproof structure, taken along line A-A'.

Referring to FIGS. 5A and 5B, the first waterproof structure 400 according to an embodiment may include a plurality of waterproof members 410, 420, and 430. For example, the first waterproof structure 400 may include a first waterproof member 410, a second waterproof member 420, and a third waterproof member 430.

At least any one of the first waterproof member 410 and the second waterproof member 420 may be formed in a form of an open loop. Each of the first waterproof member 410 and the second waterproof member 420 may be formed in a form of an open loop. The second waterproof member 420 may be formed in a form of an open loop that is disposed at an opened portion of the first waterproof member 410.

According to an embodiment, the first waterproof member 410 and the second waterproof member 420 may be disposed on different planes. For example, the first waterproof member 410 and the second waterproof member 420 may be disposed on planes having different heights. The first waterproof member 410 disposed on a first plane of a first height may be disposed to be spaced apart from the second waterproof member 420 disposed on a second plane of a second height different from the first height by a designated interval. The third waterproof member 430 may be formed between the first waterproof member 410 and the second waterproof member 420, and may be formed to fill a gap space (or, a stepped space or a first accommodation space) between the first waterproof member 410 and the second waterproof member 420. The first waterproof member 410 and the second waterproof member 420 may be physically connected to each other through the third waterproof member 430, and thus, the first waterproof structure 400 may be formed in a form of a closed loop.

According to an embodiment, at least any one of the first waterproof member 410 and the second waterproof member 420 may be disposed between the sub-display 340 and the first housing 210. A sub-display panel 330 may be disposed between at least any one of the first waterproof member 410 and the second waterproof member 420, and a sub-window 280 of the sub-display 340.

According to an embodiment, the first housing 210 may include a first seating space 110, on which a sub-window layer 280 is seated, and a second seating space 311, on which at least any one of the first waterproof member 410 and the second waterproof member 420 is seated. The first seating space 110 and the second seating space 311 may be disposed to face the -z-axis direction. The first seating space 110 may be formed to be stepped from the second seating space 311. The second seating space 311 may be disposed closer to the sub-window 280 than the first seating space 110 and a third seating space 310 on which the sub-display panel 330 is seated.

According to an embodiment, a portion of the second waterproof member 420 may overlap a black area 282 (or, an opaque area) of the sub-window 280 when viewed from the +z-axis direction. The remaining portions of at least any one of the first waterproof member 410 and the second waterproof member 420 may overlap a transparent area 281 of the sub-window 280, when viewed from the +z-axis direction.

According to an embodiment, when viewed from the +z-axis direction, the first waterproof member 410 and the second waterproof member 420, and the sub-display panel 330 may overlap each other, and thus, a size of the black area 282 of the sub-window 280 may be reduced. According to an embodiment, an overall size and an overall weight of the sub-window 280 may be reduced by reducing the black area 282 of the sub-window 280. According to an embodiment, a transparent area 281 of the sub-window 280 corresponding to an active area of the sub-display panel 330 may be enlarged by an amount by which the black area 282 of the sub-window 280 is reduced.

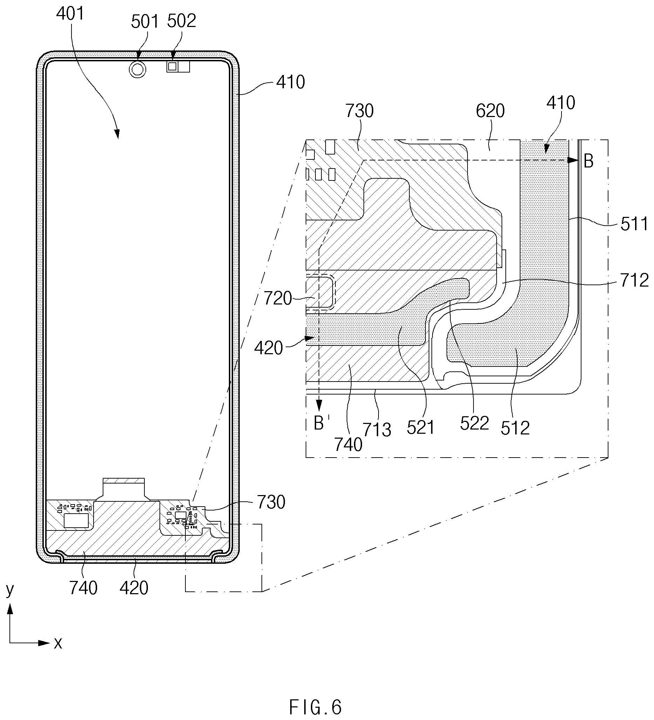

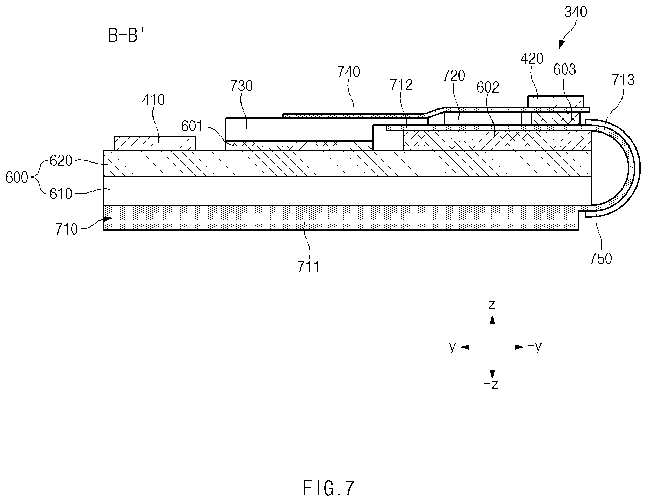

FIG. 6 is a plan view illustrating a rear surface of a sub-display, in which a third waterproof member according to an embodiment is omitted, and FIG. 7 is a cross-sectional view illustrating the sub-display taken along line B-B' in FIG. 6.

Referring to FIGS. 6 and 7, according to an embodiment, an electronic device may include a sub-display 340, a first waterproof member 410, and a second waterproof member 420.

The sub-display 340 may include a sub-display panel 710 (e.g., the sub-display panel 330 of FIG. 5B), a display driver integrated circuit (DDI) 720, and a flexible substrate 730.

The display driver integrated circuit 720 may generate driving signals for driving pixels disposed on the sub-display panel 710, in response to data and control signals that are supplied from an outside. Driving signals generated by the display driver integrated circuit 720 may be supplied to each pixel disposed on the sub-display panel 710.

A plurality of elements that are necessary for driving the display driver integrated circuit 720 may be mounted on the flexible substrate 730. The plurality of electrical elements disposed on the flexible substrate 730 may include, for example, a touch IC, a display flash memory, an electrostatic discharge (ESD) prevention diode, a pressure sensor, a fingerprint sensor, or a passive element, such as a decoupling capacitor.

The sub-display panel 710 may include a bending part 713 that is disposed to be folded toward at least a partial area of a rear surface of the sub-display 340 (e.g., a surface that faces the z axis) from an active area 711 of the sub-display panel 710. A bending part protection layer 750 (e.g., a bending protection layer (BPL)) for protecting at least a portion of the bending part 713 may be disposed on an outer surface of the bending part 713.

The sub-display panel 710 may include an extension 712 that extends from the bending part 713 to face a rear surface of the sub-display panel 710. The extension 712 may be electrically connected to the flexible substrate 730. A display driver integrated circuit 720 may be disposed on the extension 712. The display driver integrated circuit 720 disposed on the extension 712 may be protected through a circuit protection member 740. The circuit protection member 740 may be attached to cover at least a portion of the extension 712 from at least a portion of the flexible substrate 730. Because the circuit protection member 740 may directly contact external moisture and/or foreign substances, the circuit protection member 740 may be formed of a waterproof material by itself.

A sheet member 600 including at least any one of at least one metal sheet layer, at least one polymer layer, and at least one functional layer may be disposed on a rear surface of the sub-display panel 710. The at least one functional layer may include a graphite sheet for heat dissipation, an added display, a post-touch flexible printed circuit board (FPCB), a fingerprint sensor FPCB, an antenna radiator for communication, or a conductive or non-conductive tape.

As an example, a polymer layer 610 and a metal sheet layer 620 (or, a reinforcing member) may be sequentially disposed on a rear surface of the sub-display panel 710. The polymer layer 610 may be disposed on the rear surface of the sub-display panel 710, thereby providing a dark background for securing visibility of the sub-display panel 710, and may be formed as an impact absorption material for an impact absorbing operation. The metal sheet layer 620 may help reinforce rigidity of the electronic device, shield surrounding noise, and be used to disperse heat emitted from peripheral heat dissipation components.

According to an embodiment, the flexible substrate 730 may be attached to the metal sheet layer 620 that is located on the rear surface of the sub-display panel 710 through a first adhesive 601. The extension 712 may be attached to the metal sheet layer 620 that is located on the rear surface of the sub-display panel 710 through a second adhesive 602. The circuit protection member 740 may be attached to the extension 712 through a third adhesive 603. At least any one of the first adhesive 601, the second adhesive 602, and the third adhesive 603 may be omitted.

The first waterproof member 410 may be formed along the remaining peripheries, other than a lower periphery (e.g., a periphery that faces the -Y-axis direction) of the first waterproof space 401, on the metal sheet layer 620. The first waterproof member 410 may be formed along the remaining peripheries of the first waterproof space 401, other than a lower periphery that is disposed at a position corresponding to the circuit protection member 740. The first waterproof member 410 may be formed along an upper periphery (e.g., a periphery that faces the +Y axis), a left periphery (e.g., a periphery that faces the -X axis), and a right periphery (e.g., a periphery that faces the +X axis) of the first waterproof space 401, on the metal sheet layer 620. The first component area 501 and the second component area 502 may be disposed around an upper periphery of the first waterproof space 401. As an example, a camera device may be disposed in the first component area 501, and a sensor module may be disposed in the second component area 502. At least one electronic component disposed in the first component area 501 and the second component area 502 may be disposed in the first waterproof space 401 that is sealed by the first waterproof member 410, the second waterproof member 420, and the third waterproof member (e.g., the third waterproof member 430 of FIG. 5A), thereby being protected from external moisture and/or foreign substances. The second waterproof member 420 may be formed along a lower periphery of the first waterproof space 401 on the circuit protection member 740. The second waterproof member 420 may be disposed to be spaced apart from the first waterproof member 410. The first waterproof member 410 and the second waterproof member 420 may include at least one of a tape, an adhesive, a dispensed waterproof material, silicone, waterproof rubber, and urethane.

According to an embodiment, the first waterproof member 410 may include a first waterproof area 511 having an inverted U shape, and a first protruding area 512 that protrudes from opposite ends of the first waterproof area 511 toward the second waterproof member 420. The first protruding area 512 may protrude in a direction (e.g., the x-axis direction) that is perpendicular to a folding axis, from a partial area of the first waterproof area 511 of the first waterproof member 410 that extends along the folding axis (e.g., the folding axis A of FIG. 1 or the y-axis direction). The first protruding area 512 may be formed to face a corner point at which the bending part 713 of the sub-display panel and the extension 712, having a width greater than that of the bending part 713, meet each other.

The second waterproof member 420 may include a second waterproof area 521 having a stripe shape, and a second protruding area 522 that protrudes from opposite ends of the second waterproof area 521 toward the first waterproof member 410. The second protruding area 522 may be formed to protrude on the circuit protection member 740 toward the first waterproof area 511 of the first waterproof member 410 that extends along the y-axis direction. The second protruding area 522 may be formed along a periphery of the bending part 713 of the sub-display panel and a periphery of the extension 712, which face the first protruding area 512.

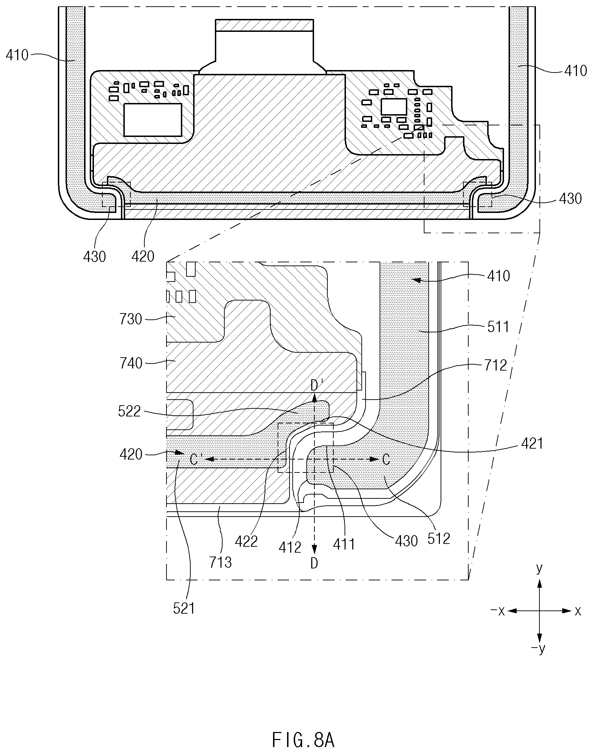

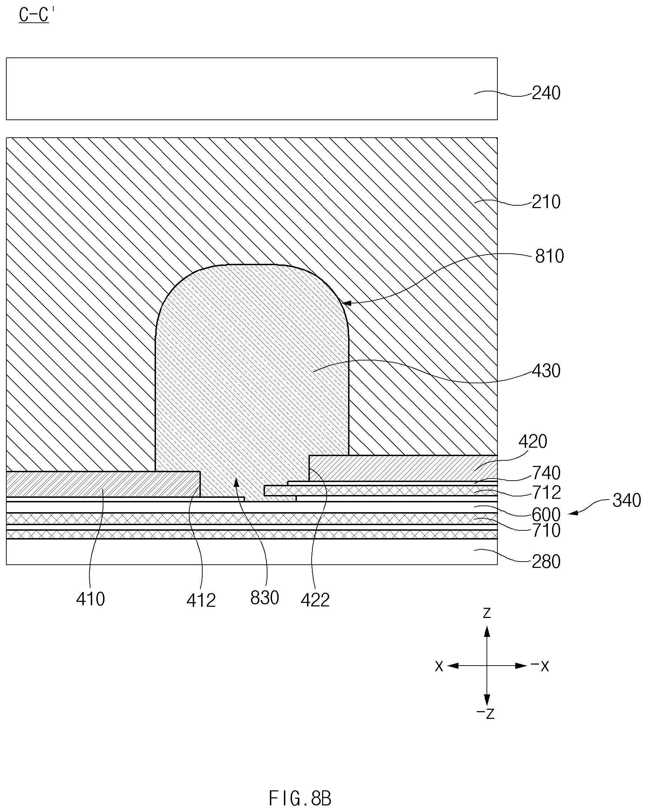

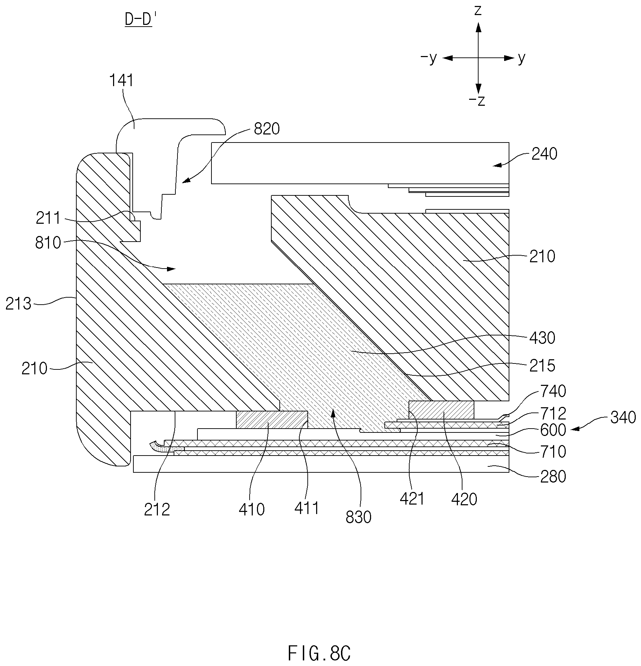

FIG. 8A is a plan view illustrating a partial area of an electronic device including a first waterproof member, a second waterproof member, and a third waterproof member according to an embodiment of the disclosure, FIG. 8B is a cross-sectional view illustrating the electronic device, taken along line C-C' of FIG. 8A, and FIG. 8C is a cross-sectional view illustrating the electronic device, taken along line D-D' of FIG. 8A.

Referring to FIGS. 8A to 8C, according to an embodiment, an electronic device may include a main display 240, a sub-display 340, a first housing 210, a first decorative member 141 (or, a protective frame, a protective member, or a decorative member) (e.g., the first decorative member 141 of FIG. 3), and a plurality of waterproof members 410, 420, and 430.

The plurality of waterproof members 410, 420, and 430 may include a first waterproof member 410, a second waterproof member 420, and a third waterproof member 430.

At least any one of one end and an opposite end of the first waterproof member 410 (or, the first protruding area 512) may include a first waterproof side surface 411 and a second waterproof side surface 412 that face different directions. The first waterproof side surface 411 may be disposed to face the y-axis direction, and the second waterproof side surface 412 may be disposed to face the -x-axis direction. The first waterproof side surface 411 may be disposed to face a side surface of the extension 712 of the sub-display, and the second waterproof side surface 412 may be disposed to face a side surface of the bending part 713 of the sub-display.

At least any one of one end and an opposite end of the second waterproof member 420 (or, the second protruding area 522) may include a third waterproof side surface 421 that faces the first waterproof side surface 411, and a fourth waterproof side surface 422 that faces the second waterproof side surface 412. The third waterproof side surface 421 may be disposed to face a direction opposite to the first waterproof side surface 411, and the fourth waterproof side surface 422 may be disposed to face a direction opposite to the second waterproof side surface 412. The third waterproof side surface 421 may be disposed to be spaced apart from the first waterproof side surface 411 by a designated interval, and the fourth waterproof side surface 422 may be disposed to be spaced apart from the second waterproof side surface 412 by a designated interval.

The third waterproof member 430 may connect one end of the first waterproof member 410 and an opposite end of the second waterproof member 420 that extends in the -x-axis direction toward the one end of the first waterproof member 410, and may connect the opposite end of the first waterproof member 410 and one end of the second waterproof member 420 that extends in the x-axis direction toward the opposite end of the first waterproof member 410.

The third waterproof member 430 may be disposed between the first waterproof member 410 and the second waterproof member 420. The third waterproof member 430 may be formed in a stepped area between the first waterproof member 410 and the second waterproof member 420. The first waterproof member 410 may be formed on a sheet member 600 (e.g., the metal sheet layer 620 of FIG. 7) that is disposed between the sub-display panel 710 and the first housing 210, and the second waterproof member 420 may be formed on the circuit protection member 740 that is disposed at a position higher or lower than the sheet member 600. The third waterproof member 430 may be formed between the first waterproof member 410 and the second waterproof member 420, thereby filling a gap formed by a height difference (step) between the sheet member 600 and the circuit protection member 740. The first waterproof member 410 may be formed in a separated state to be spaced apart from the second waterproof member 420 by a designated interval at a stepped portion. The third waterproof member 430 may fill, without a gap, a stepped portion including a designated interval between the first waterproof member 410 and the second waterproof member 420, and thus, the first waterproof member 410 and the second waterproof member 420 may be formed in a form of a closed loop without a discontinuous section through the third waterproof member 430. The first waterproof space (e.g., the first waterproof space 401 of FIGS. 4 and 6) that is sealed by the first waterproof member 410, the second waterproof member 420, and the third waterproof member 430, which are formed in a closed-loop form, may secure stable waterproof and dustproof performance.

The third waterproof member 430 may include a cured in place gasket (CIPG) (e.g., a waterproof filling member), which includes a semi-solid or liquid material and has a property of being solidified by natural or external conditions (e.g., heat, ultraviolet light, humidity, or pressure).

According to an embodiment, the first decorative member 141 may be formed to surround a portion of the main display 240. The decorative member 141 may be inserted into at least a portion of an accommodation space 820 (or a second gap space) between the main display 240 and the first housing 210.

According to an embodiment, the first housing 210 may include a side surface 213 (or an outer surface) that faces an outside of the electronic device, a first inner surface 211 (e.g., a surface that faces the z axis) (or a first surface), on which the main display panel and the first decorative member 141 are seated, and a second inner surface 212 (e.g., a surface that faces the -z axis) (or a second surface), on which the first waterproof member 410 and the second waterproof member 420 are seated. The first inner surface 211 may be disposed to face the first decorative member 141. The second inner surface 212 may be disposed to contact the first waterproof member 410 and the second waterproof member 420. The side surface 213 may be disposed to be perpendicular to the first inner surface 211 and the second inner surface 212.

The first housing 210 may include a through-hole 810 (or a first through-hole or a filling hole) that is inclined at a designated angle. The through-hole 810 may be formed to be inclined toward an interior of the electronic device, as going from the first inner surface 211 to the second inner surface 212. The central axis of the through-hole 810 (or an axis in a thickness direction) may be formed to form an acute angle with the side surface 213. The through-hole 810 may be formed to pass through the first inner surface 211 and the second inner surface 212. The through-hole 810 may be connected to an accommodation space 820, into which at least a portion of the first decorative member 141 is inserted. The third waterproof member 430 may be filled in the through-hole 810 of the first housing 210, while the main display 240 and the sub-display 340 are accommodated in the first housing 210. After the third waterproof member 430 is filled in the through-hole 810, the decorative member 141 may be assembled in the accommodation space.

When a linear through-hole is formed in the first housing 210 to be disposed in a row with a gap space 830 between the first waterproof member 410 and the second waterproof member 420 along the z axis, an entrance of the through-hole 810 is blocked by the main display 240, so that the third waterproof member 430 cannot be injected into the through-hole 810. According to an embodiment, the gap space 830 between the first waterproof member 410 and the second waterproof member 420 may overlap the main display 240, when viewed from the z-axis and/or -z-axis direction (or when viewed from a top of the main display 240), and the entrance of the through-hole 810 (or a portion connected to the accommodation space 820) may be formed not to overlap at least a portion of the main display 240, when viewed from the z-axis and/or -z-axis direction. The through-hole 810 may be formed to be inclined toward the first decorative member 141, in the gap space 830 between the first waterproof member 410 and the second waterproof member 420. While the main display 240 and the sub-display 340 are assembled in the first housing 210, the third waterproof member 430 may be injected through the accommodation space 820 connected to the through-hole 810, so that the third waterproof member 430 may be filled in the through-hole 810.

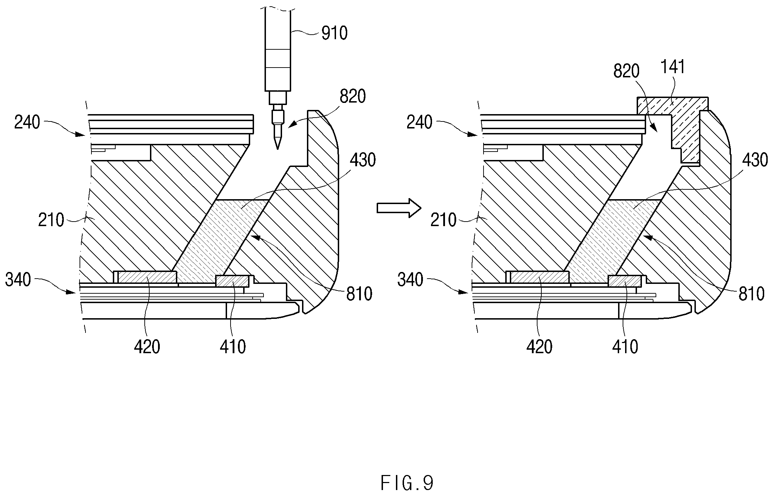

FIG. 9 illustrates a method for assembling an electronic device including a third waterproof member according to an embodiment of the disclosure.

Referring to FIG. 9, the first housing 210 including the inclined through-hole 810 may be provided. The main display 240 may be assembled in the first housing 210. The first waterproof member 410 and the second waterproof member 420 may be formed on the second inner surface 212 of the first housing 210. The sub-display 340 may be assembled in the first housing 210 through the first waterproof member 410 and the second waterproof member 420.

A dispenser 910 may be aligned in the accommodation space 820 between the main display 240 and the first housing 210. After the dispenser 910 enters the accommodation space 820, the third waterproof member 430 discharged through the dispenser 910 may be injected into the through-hole 810 connected to the accommodation space 820. After the third waterproof member 430 filled in the through-hole 810 is naturally cured at room temperature, the first decorative member 141 may be assembled in the accommodation space 820.

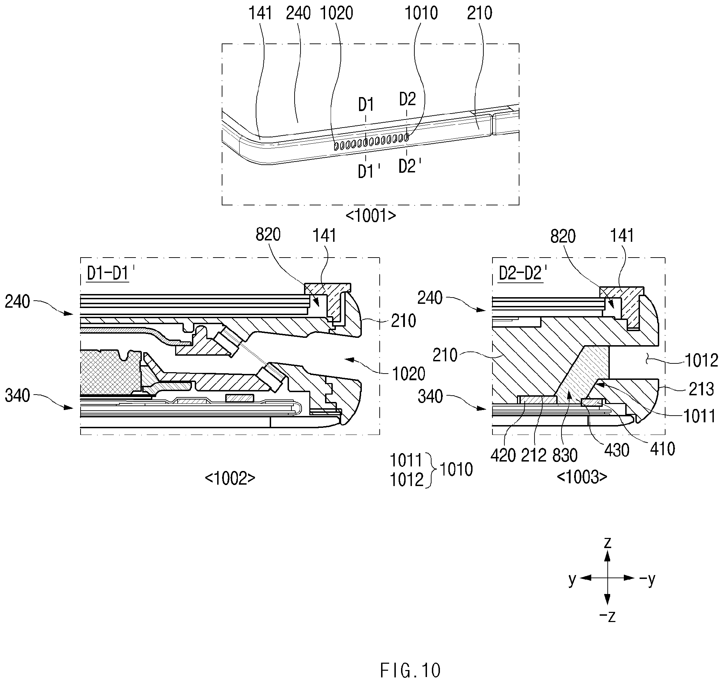

FIG. 10 illustrates an electronic device having a speaker hole and a through-hole according to an embodiment of the disclosure. In FIG. 10, view <1001> is an enlarged perspective view of an area, in which a speaker hole and a through-hole of the electronic device are disposed, view <1002> is a view taken along line D1-D1' in view <1001>, and view <1003> is a view taken along line D1-D1' in view <1001>.

Referring to FIG. 10, the electronic device according to an embodiment may include a plurality of speaker holes 1020, and at least one through-hole 1010 that is disposed adjacent to at least any one of the plurality of speaker holes 1020.

The through-hole 1010 may be formed in the first housing 210, in which a partial area of the main display 240 and the sub-display 340 are accommodated. The through-hole 810 may be formed to pass through the second inner surface 212 of the first housing 210 and the side surface 213 of the first housing 210.

The through-hole 1010 may include a first hole 1011 and a second hole 1012 that are connected to each other. The first hole 1011 may be formed to pass through the second inner surface 212 of the first housing 210 to be connected to a gap space between the first waterproof member 410 and the second waterproof member 420. The second hole 1012 may be formed to pass through the side surface 213 of the first housing 210 to be connected to an outside of the electronic device. The first hole 1011 may be formed to be inclined at a designated angle, or may be formed to be perpendicular to the second hole 1012. The second hole 1012 may have a depth in a direction that is parallel to at least a portion of the speaker hole 1020. As an example, the first hole 1011 may be formed to be inclined at a designated angle, and the second hole 1012 may be formed to be parallel to the sub-display 340 between the main display 240 and the sub-display 340. As an example, the first hole 1011 may be formed in a linear form to be disposed in a row with the gap space 830 between the first waterproof member 410 and the second waterproof member 420, and the second hole 1012 may be formed to be perpendicular to the first hole 1011. As an example, the first hole 1011 may be formed in a linear form to be disposed in a row with the gap space 830 between the first waterproof member 410 and the second waterproof member 420, and the second hole 1012 may be formed to be inclined to form an obtuse angle with the first hole 1011. As an example, the first hole 1011 may be formed to be inclined at a designated first angle, and the second hole 1012 may be formed to be inclined at a designated second angle. The first hole 1011 may be formed to be inclined to form an acute angle, which is a first angle, with the sub-display 340, and the second hole 1012 may be formed to be inclined to the sub-display 340 at a second angle that is smaller than the first angle.

According to an embodiment, the first hole 1011, which is formed to be inclined at a designated angle, may be formed to be inclined to be closer to the side surface 213 of the first housing 210 as going from the second inner surface 212 toward the second hole 1012. The first hole 1011, which is formed to be inclined at a designated angle, may be formed to be inclined toward an interior of the electronic device as going from the second hole 1012 toward the second inner surface 212. The through-hole 1010 may be separated without being connected to the accommodation space 820, into which at least a portion of the first decorative member 141 is inserted. The third waterproof member 430 may be filled in the through-hole 1010 of the first housing 210, while the main display 240 and the sub-display 340 are accommodated in the first housing 210. After the third waterproof member 430 is filled in the through-hole 1010, the decorative member 141 may be assembled in the accommodation space 820.

According to an embodiment, the gap space 830 between the first waterproof member 410 and the second waterproof member 420 and the first hole 1011 may overlap the main display 240, when viewed from a top of the main display 240, and the second hole 1012 may be formed not to overlap at least a portion of the main display 240, when viewed from a top of the main display 240. The through-hole 1010 may be formed to be inclined toward the side surface 213 of the first housing 210, in the gap space 830 between the first waterproof member 410 and the second waterproof member 420. While the main display 240 and the sub-display 340 are assembled in the first housing 210, the third waterproof member 430 may be injected through the second hole 1012, so that the third waterproof member 430 may be filled in the first hole 1011 and the second hole 1012.

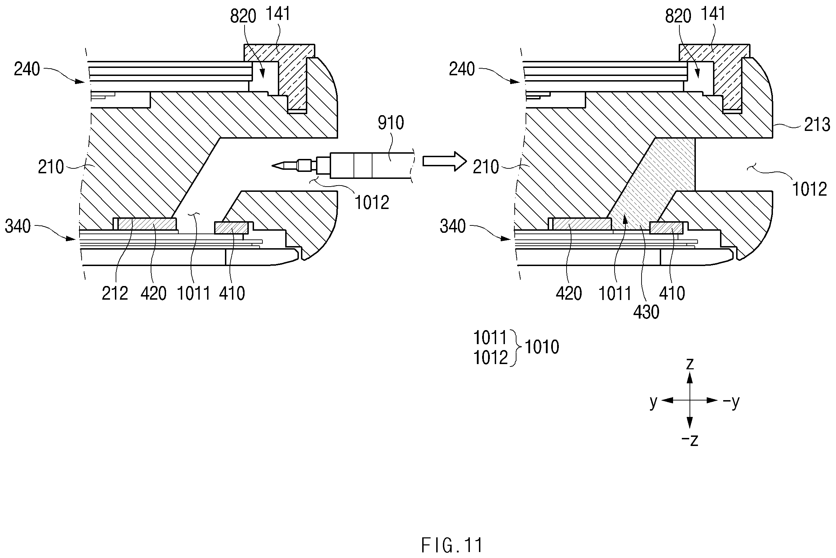

FIG. 11 illustrates a method for assembling an electronic device including a third waterproof member according to an embodiment of the disclosure.

Referring to FIG. 11, the first housing 210, in which a through-hole including the first hole 1011 and the second hole 1012 is formed, may be provided. The main display 240 may be assembled in the first housing 210. The first waterproof member 410 and the second waterproof member 420 may be formed on the second inner surface 212 of the first housing 210. The sub-display 340 may be assembled in the first housing 210 through the first waterproof member 410 and the second waterproof member 420.

A dispenser 910 may be aligned with the second hole 1012. After the dispenser 910 enters the second hole 1012, the third waterproof member 430 discharged through the dispenser 910 may be injected into the first hole 1011 connected to the second hole 1012. After the third waterproof member 430 filled in the first hole 1011 is naturally cured at room temperature, the first decorative member 141 may be assembled in the accommodation space 820.

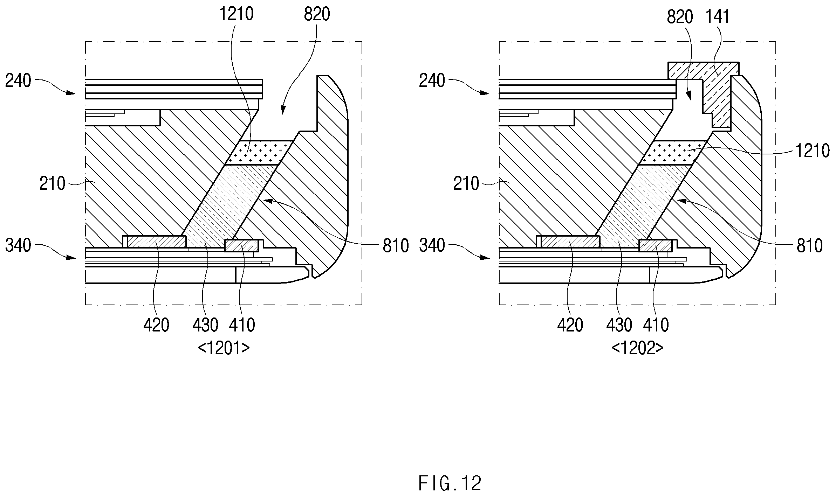

FIG. 12 is a view illustrating an electronic device including a bonding member according to an embodiment of the disclosure. In FIG. 12, view <1201> is a view illustrating a state before the first decorative member is mounted on the electronic device illustrated in FIGS. 8A to 8C, and view <1202> is a view illustrating a state after the first decorative member is mounted on the electronic device illustrated in FIGS. 8A to 8C.

Referring to FIG. 12, the electronic device according to an embodiment may include the main display 240, the sub-display 340, the first housing 210, a plurality of waterproof members 410, 420, and 430, a bonding member 1210, and the first decorative member 141. At least some configurations of the electronic device of FIG. 12 may be applied to at least some configurations of the electronic device of FIGS. 1 to 9. As an example, at least some configurations of the electronic device of FIGS. 1 to 9 may be applied to the main display 240, the sub-display 340, the first housing 210, the plurality of waterproof members 410, 420, and 430, and the first decorative member 141 of FIG. 12.

The bonding member 1210 may be accommodated in the through-hole 810 of the first housing 210. The bonding member 1210 may provide a designated level of bonding force (or a restraining force) so that the third waterproof member 430 does not escape or leak from the through-hole 810 before being cured at room temperature. The bonding member 1210 may be filled in the through-hole 810 to contact one surface (e.g., a surface that faces the z axis) of the third waterproof member 430. The bonding member 1210 may restrain the third waterproof member 430 in an uncured state in the through-hole 810, so that a subsequent assembly process (e.g., an assembly process of the first decorative member 141) may be performed before the third waterproof member 430 is cured at room temperature.

The bonding member 1210 may be formed of a material that has a specific viscoelasticity and/or fluidity. As an example, the bonding member 1210 may include a resin material (e.g., silicone or resin) in a form of gel or sol. As an example, the bonding member 1210 may be formed by curing (e.g., UV curing or thermal curing) after a liquid material having a specific viscosity is filled in the through-hole 810. The bonding member 1210 may be formed of a material that has a curing speed faster than that of the third waterproof member 430.

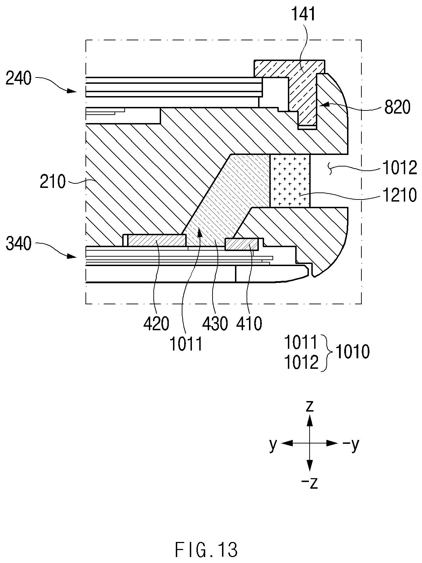

FIG. 13 is a view illustrating an electronic device including a bonding member according to an embodiment of the disclosure. FIG. 13 is a view illustrating the electronic device of FIG. 10 that includes a bonding member.

Referring to FIG. 13, the electronic device according to an embodiment may include the main display 240, the sub-display 340, the first housing 210, a plurality of waterproof members 410, 420, and 430, the bonding member 1210, and the first decorative member 141. At least some configurations of the electronic device of FIGS. 1 to 8B, FIG. 10, and FIG. 11 may be applied to at least some configurations of the electronic device of FIG. 13. As an example, at least some configurations of the electronic device of FIGS. 1 to 8B, FIG. 10, and FIG. 11 may be applied to the main display 240, the sub-display 340, the first housing 210, the plurality of waterproof members 410, 420, and 430, and the first decorative member 141 of FIG. 13. The description of the bonding member of FIG. 12 may be applied to the description of the bonding member of FIG. 13.

The bonding member 1210 may be accommodated in the through-hole 1010 of the first housing 210. As an example, at least a portion of the bonding member 1210 may be accommodated in the second hole 1012 included in the through-hole 1010, and at least a portion of the third waterproof member 430 may be accommodated in the first hole 1011.

The bonding member 1210 may provide a designated level of bonding force (or a restraining force) so that the third waterproof member 430 does not escape or leak from the through-hole 1010 before being cured at room temperature. The bonding member 1210 may be filled in the through-hole 1010 to contact one surface (e.g., a surface that faces the -y axis) of the third waterproof member 430. The bonding member 1210 may restrain the third waterproof member 430 in an uncured state in the through-hole 1010, so that a subsequent assembly process (e.g., an assembly process of the first decorative member 141) may be performed before the third waterproof member 430 is cured at room temperature.

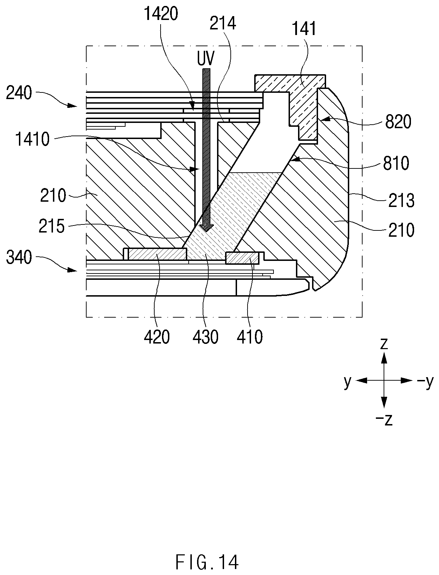

FIG. 14 is a view illustrating an electronic device including a second through-hole according to an embodiment of the disclosure.

Referring to FIG. 14, the electronic device according to an embodiment may include the main display 240, the sub-display 340, the first housing 210, a plurality of waterproof members 410, 420, and 430, the first decorative member 141, the first through-hole 810, and the second through-hole 1410 (or a curing hole). At least some configurations of the electronic device of FIGS. 1 to 9 and FIG. 12 may be applied to at least some configurations of the electronic device of FIG. 14. As an example, at least some configurations of the electronic device of FIGS. 1 to 9 and FIG. 12 may be applied to the main display 240, the sub-display 340, the first housing 210, the plurality of waterproof members 410, 420, and 430, the first decorative member 141, and the first through-hole 810 of FIG. 14.

The second through-hole 1410 may be formed to pass through an inclined surface 215 formed by the first through-hole 810 and a third inner surface 214, on which the main display 240 is seated. The second through-hole 1410 may be formed to have a depth in a direction that is parallel to the side surface 213 of the first housing 210. A central axis of the second through-hole 1410 may be formed to be parallel to the side surface 213 of the first housing 210. The second through-hole 1410 may be formed to be connected to at least a partial area of the first through-hole 810.

The second through-hole 1410 may be disposed to overlap the main display 240, when viewed from the z-axis and/or -z-axis direction (or when viewed from a top of the main display 240). In a configuration that is formed of an opaque material (e.g., metal), among at least some configurations included in the main display 240, a passage hole 1420 may be formed in an area that overlaps the second through-hole 1410.

Light (e.g., ultraviolet (UV) light) may be irradiated to the third waterproof member 430 that is accommodated in an interior of the first housing 210, through the passage hole 1420 and the second through-hole 1410. The third waterproof member 430 may be cured at a faster speed by light curing than by room-temperature curing.

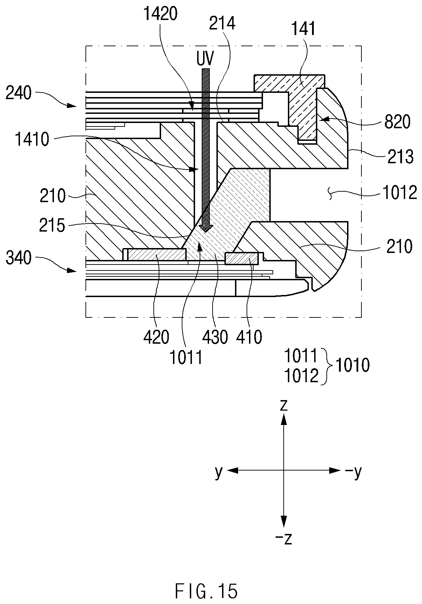

FIG. 15 is a view illustrating an electronic device including a second through-hole according to an embodiment of the disclosure.

Referring to FIG. 15, the electronic device according to an embodiment may include the main display 240, the sub-display 340, the first housing 210, a plurality of waterproof members 410, 420, and 430, the first decorative member 141, the first through-hole 810, and the second through-hole 1410 (or a curing hole). At least some configurations of the electronic device of FIG. 8B, FIG. 10, FIG. 11, and FIG. 13 may be applied to at least some configurations of the electronic device of FIG. 15. As an example, at least some configurations of the electronic device of FIG. 8B, FIG. 10, FIG. 11, and FIG. 13 may be applied to the main display 240, the sub-display 340, the first housing 210, the plurality of waterproof members 410, 420, and 430, and the first decorative member 141 of FIG. 15.

The second through-hole 1410 may be formed to pass through an inclined surface 215 formed by the first through-hole 810 and a third inner surface 214, on which the main display 240 is seated. The second through-hole 1410 may be formed to have a depth in a direction that is parallel to the side surface 213 of the first housing 210 and perpendicular to the second hole 1012. A central axis of the second through-hole 1410 may be formed to be parallel to the side surface 213 of the first housing 210. The second through-hole 1410 may be formed to be connected to at least a partial area of the first through-hole 810.

The second through-hole 1410 may be disposed to overlap the main display 240, when viewed from the z-axis and/or -z-axis direction (or when viewed from a top of the main display 240). In a configuration that is formed of an opaque material (e.g., metal), among at least some configurations included in the main display 240, a passage hole 1420 may be formed in an area that overlaps the second through-hole 1410.

Light (e.g., ultraviolet (UV) light) may be irradiated to the third waterproof member 430 that is accommodated in an interior of the first housing 210, through the passage hole 1420 and the second through-hole 1410. The third waterproof member 430 may be cured at a faster speed by light curing than by room-temperature curing.

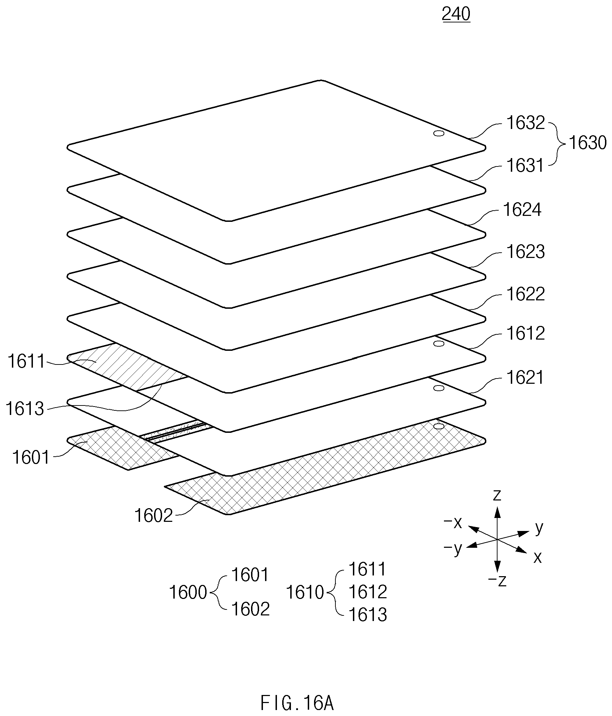

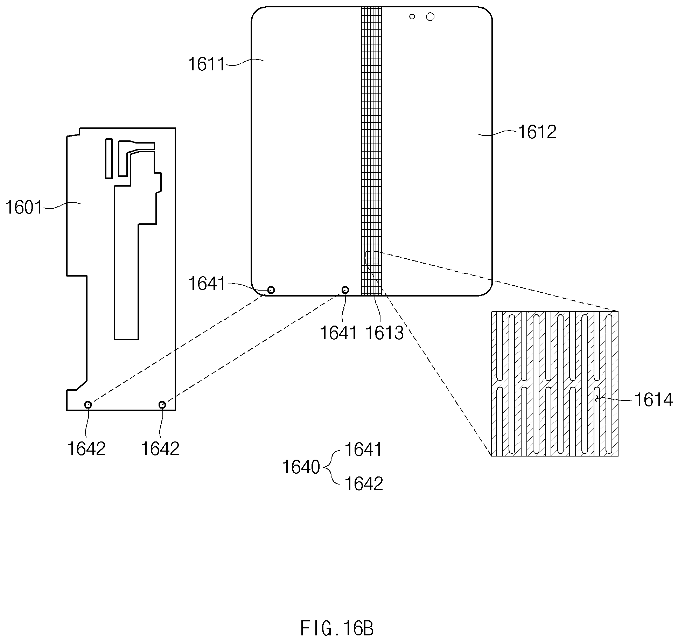

FIG. 16A is an exploded perspective view of a main display according to an embodiment, and FIG. 16B is a view illustrating some layers illustrated in FIG. 16A in detail.

Referring to FIGS. 16A and 16B, the main display 240 (e.g., the main display 240 of FIGS. 8B, 8C, 9, 10, 11, 12, 13, 14, and 15) may include a main window 1630, a main display panel 1624 (or a first display panel), a polarizer 1623 (or a polarizing film or a polarizing layer), a barrier layer 1622, a first metal sheet 1610, at least one functional member 1621, and a second metal sheet 1600, which are sequentially disposed on a rear surface of the main window 1630 (e.g., a surface that faces the -z axis). The main display 240 illustrated in FIG. 16A is merely one example provided for describing an embodiment, and all components included in the main display 240 illustrated in FIG. 16A may not be essential components. Accordingly, the main display 240 may be configured by omitting some of the components illustrated in FIG. 16A or by adding some components.

At least a portion of the main window 1630 may be exposed to the outside through a front surface (e.g., a surface that faces the z axis) of the electronic device. The main window 1630 may be formed as at least one layer to include a glass layer 1631, or may be disposed as a plurality of layers to include the glass layer 1631 and a polymer layer 1632. As an example, the main window 1630 may include a polymer layer 1632, and a glass layer 1631 that is disposed on a rear surface of the polymer layer 1632. For example, the glass layer 1631 may include ultra thin glass (UTG). The polymer layer 1632 may include polyethylene terephthalate (PET) and/or polyimide (PI).

The main display panel 1624 may include a plurality of pixels for displaying an image. The main display panel 1624 may include an organic light emitting diode (OLED) panel, a liquid crystal display (LCD) panel, or a quantum dot light emitting diode (QLED) panel. The main display panel 1624 may further include a touch sensor, in which electrodes that receive touch input, fingerprint recognition, or pen input are disposed. According to an embodiment, the display panel 1624 and the polarizer 1623 may be formed integrally.

The barrier layer 1622 may be disposed under the display panel 1624. The barrier layer 1622 may provide a dark background for securing visibility of the display panel 1624, and may be formed as an impact absorption material for an impact absorption operation. In an embodiment, the barrier layer 1622 may be disposed under the display panel 1624, the polarizer 1623, and/or the first metal sheet 1610.

The first metal sheet 1610 may be disposed on a rear surface of the main display panel 1624. The first metal sheet 1610 may be formed of a metal material that has a rigid property. As an example, the first metal sheet 1610 may be formed as at least one layer structure including steel use stainless (SUS) (e.g., stainless steel (STS)), copper (Cu), aluminum (Al), and/or a metal clad (e.g., a laminated member in which SUS and Al are alternately disposed).

The first metal sheet 1610 may include a first planar area 1611, a second planar area 1612, and a bending area 1613 (or a flexible area or a deformable area). The first planar area 1611 may correspond to the first housing (e.g., the first housing 210 of FIGS. 1 to 15) and/or to the sub-display (e.g., the sub-display 340 of FIGS. 1 to 15). The second planar area 1612 may correspond to the second housing (e.g., the second housing 220 of FIGS. 1 to 4).

The bending area 1613 may be disposed between the first planar area 1611 and the second planar area 1612. The bending area 1613 may be an area that is relatively easy to deform, compared to the first planar area 1611 and the second planar area 1612. The bending area 1613 may be an area that corresponds to a portion (e.g., a portion between the first housing and the second housing), in which the main display panel 1624 is deformed. A plurality of openings 1614 that are disposed at designated intervals may be formed in the bending area 1613. By adjusting at least one of a size, a shape, an arrangement, or a density of the plurality of openings 1614, deformation characteristics of the first metal sheet 1610 may be determined. By the plurality of openings 1614, the bending area 1613 may have, for example, a lattice form. By the plurality of openings 1614, the bending area 1613 may have a relatively flexible property, compared to the first planar area 1611 and the second planar area 1612.

At least one functional member 1621 may be disposed between the first metal sheet 1610 and the second metal sheet 1600, and/or between the barrier layer 1622 and the first metal sheet 1610. The at least one functional member 1621 may include a graphite sheet for heat dissipation, a sheet for preventing bubbles, an added display, a post-touch flexible printed circuit board (FPCB), a fingerprint sensor flexible printed circuit board (FPCB), a communication antenna radiator, or a conductive or non-conductive tape. The functional member 1621 that includes a sheet for preventing bubbles may be formed, for example, of thermoplastic polyurethane (TPU). As an example, when the functional member 1621 is not deformable (e.g., not bendable), the functional member 1621 may be individually disposed in each of the first housing and the second housing. As an example, when the functional member 1621 is deformable, the functional member 1621 may be disposed from the first housing to at least a portion of the second housing through a hinge structure (e.g., the hinge structure 202 of FIG. 3).

The second metal sheet 1600 may be disposed under the first metal sheet 1610. The second metal sheet 1600 may include a first sub-sheet layer 1601 that is disposed in the first housing, and a second sub-sheet layer 1602 that is disposed in the second housing. The first sub-sheet layer 1601 may overlap the first planar area 1611 of the first metal sheet 1610, when viewed from the z-axis and/or -z-axis direction (or when viewed from a top of the main display 240). The second sub-sheet layer 1602 may overlap the second planar area 1612 of the first metal sheet 1610, when viewed from the z-axis and/or -z-axis direction (or when viewed from a top of the main display 240).

The second metal sheet 1600 may provide rigidity for the display module 500, and may be used as a ground for preventing malfunction of the main display 240. The second metal sheet 1600 may be formed of a metal material that has high rigidity. As an example, the second metal sheet 1600 may be formed of stainless steel (SUS) or aluminum (Al).

According to an embodiment, at least one layer included in the main display 240 may include a passage hole 1640 (e.g., the passage hole 1420 of FIG. 15), as illustrated in FIG. 16B. A layer formed of a metal material, among a plurality of layers included in the main display 240, may include a passage hole 1640. For example, at least one of a first metal sheet 1610 and a second metal sheet 1600, which are formed of a metal material, may include a passage hole 1640.

According to an embodiment, the passage hole 1640 may include a plurality of first passage holes 1641 and a plurality of second passage holes 1642. A plurality of first passage holes 1641 may be formed to pass through a partial area of the first metal sheet 1610. A plurality of first passage holes 1641 may be formed to pass through a partial area of a first planar area 1611 of the first metal sheet 1610. The plurality of first passage holes 1641 may be formed in an area that overlaps at least a portion of a third waterproof member (e.g., the third waterproof member 430 of FIGS. 5A to 15). A plurality of second passage holes 1642 may be formed to pass through a partial area of the second metal sheet 1600. A plurality of second passage holes 1642 may be formed to pass through a partial area of a first sub-sheet layer 1601 of the second metal sheet 1600. Each of the plurality of second passage holes 1642 may overlap each of the plurality of first passage holes 1641 when viewed from the z-axis and/or -z-axis direction. Each of the plurality of second passage holes 1642 may be formed in an area that overlaps at least a portion of the third waterproof member when viewed from the z-axis and/or -z-axis direction.

According to an embodiment, ultraviolet light that passes through the main display 240 through the plurality of first passage holes 1641 and the plurality of second passage holes 1642 may be irradiated onto the third waterproof member. The third waterproof member that is cured by ultraviolet light may be cured more rapidly than room-temperature curing.

FIGS. 17A to 17E are views for explaining a method for assembling an electronic device according to an embodiment of the disclosure.

As illustrated in FIG. 17A, the first housing 210 and the second housing 220, which include a plurality of through-holes, may be coupled to a hinge structure 202.

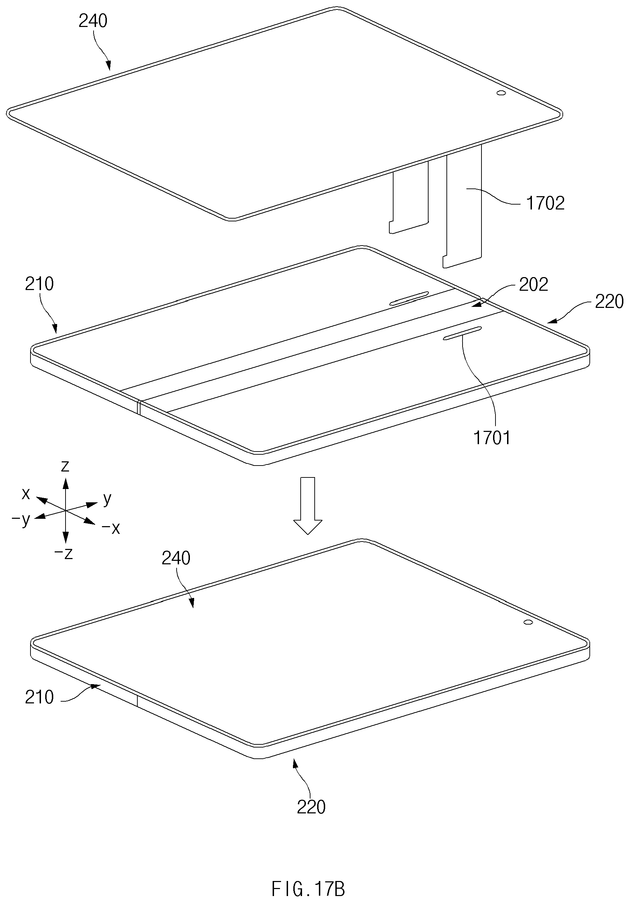

The main display 240 may be seated on the first housing 210 and the second housing 220, as illustrated in FIG. 17B. The main display 240 may be disposed on one surface (e.g., a surface that faces the z axis) of each of the first housing 210 and the second housing 220. A tail portion 1702 of a main circuit board included in the main display 240 may be inserted into holes 1710 that are formed in each of the first housing 210 and the second housing 220.

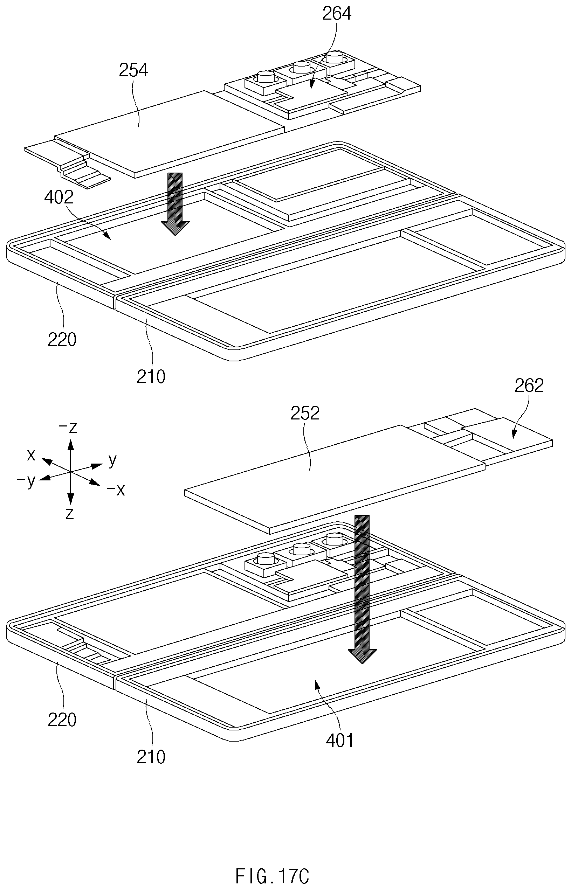

A first battery 254 and a first printed circuit board 264 may be seated on an opposite surface (e.g., a surface that faces the -z axis) of the first housing 210, as illustrated in FIG. 17C. A second battery 252 and a second printed circuit board 262 may be seated on an opposite surface (e.g., a surface that faces the -z axis) of the second housing 220.

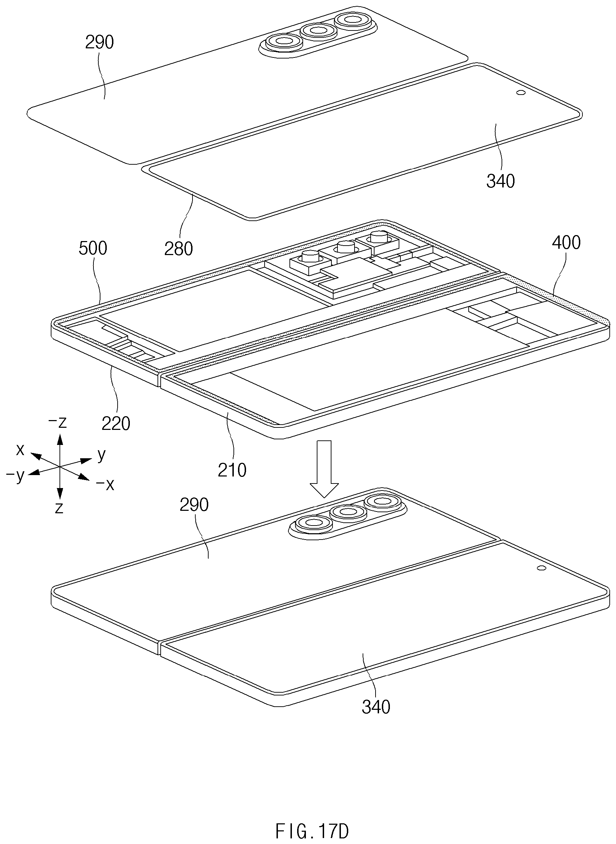

A first waterproof structure 400 may be formed on an opposite surface of the first housing 210, as illustrated in FIG. 17D, and a second waterproof structure 500 may be formed on an opposite surface of the second housing 220. The first waterproof structure 400 may be formed in an area that overlaps a sub-display 340, when viewed from the z-axis or -z-axis direction. A sub-display 240 may be assembled on an opposite surface of the first housing 210, and a back cover 290 may be assembled on an opposite surface of the second housing 220.

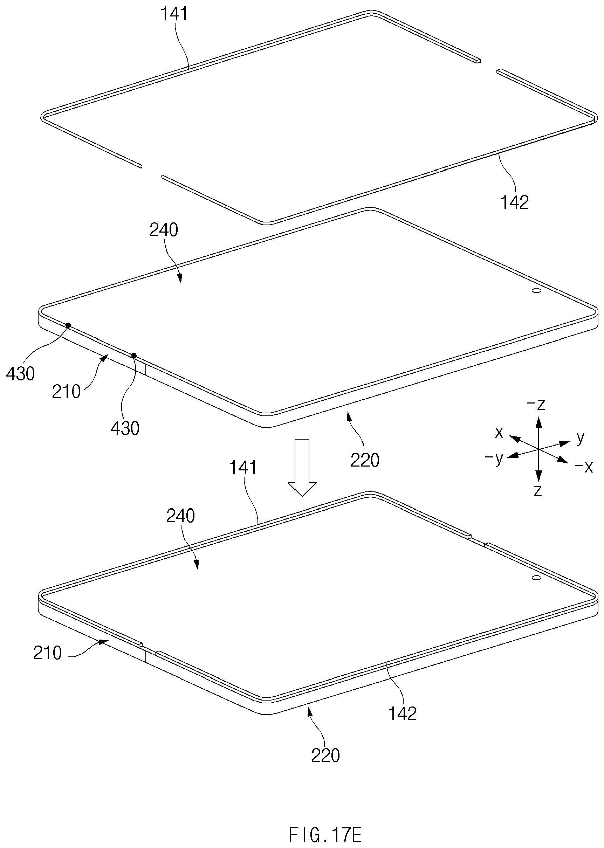

As illustrated in FIG. 17E, after the third waterproof member 430 is injected through an accommodation space between the main display 240 and the first housing 210, the first decorative member 141 and the second decorative member 142 may be assembled in the accommodation space.

The electronic device described above is merely one example for explaining the disclosure, and the electronic device does not necessarily include all components described above. Accordingly, some of the components described above may be omitted, or some components may be added to constitute the electronic device.

An embodiment of the disclosure is a foldable electronic device that may support a waterproof and/or dustproof structure of the sub-display.

Furthermore, an embodiment of the disclosure may reduce a black area of a sub-window, by disposing a waterproof structure that overlaps the main display between the sub-display and the first housing, when viewed from the z-axis or -z-axis direction.

Furthermore, an embodiment of the disclosure may enlarge a transparent area of a sub-window that corresponds to an active area of the sub-display, by reducing a black area of the sub-window.

Furthermore, an embodiment of the disclosure may reduce a size and a weight of a sub-window by reducing a black area of the sub-window.

A foldable electronic device according to an embodiment disclosed in the disclosure may include a first housing 210 that includes a through-hole 810 and 1010, at least a portion of which is formed to be inclined, a second housing 220 that is rotatably connected to the first housing 210, a first display 240 that is disposed on a first surface 211 of the first housing 210, a second display 340 that is disposed on a second surface 212 of the first housing 210, a first waterproof member 410 that is disposed between the second surface 212 of the first housing 210 and the second display 340 and overlaps at least a portion of the through-hole 810 and 1010 when the first display 240 is viewed from above (or when viewed from the z-axis or -z-axis direction), a second waterproof member 420 that is disposed between the second surface 212 of the first housing 210 and the second display 340 to be spaced apart from the first waterproof member 410 and overlaps at least a portion of the through-hole 810 and 1010 when the first display 240 is viewed from above (or when viewed from the z-axis or -z-axis direction), and a third waterproof member 430 that is filled in the through-hole 810 and 1010 to connect the first waterproof member 410 and the second waterproof member 420.

According to an embodiment, at least a portion of any one of the first waterproof member 410 and the second waterproof member 420 may overlap the first display 240, with the first housing 210 interposed therebetween, when the first display 240 is viewed from a top (or when viewed from the z-axis or -z-axis direction).

According to an embodiment, the first housing 210 may include a side surface 213 that is formed between the first surface 211 that faces a first direction and the second surface 212 that faces a second direction opposite to the first direction.

According to an embodiment, at least a portion of the through-hole 810 and 1010 may be formed to be inclined toward the side surface 213 as going from the second surface 212 toward the first surface 211.

According to an embodiment, a central axis of the through-hole 810 and 1010 may form an acute angle with the side surface 213 of the first housing 210.

According to an embodiment, the through-hole 810 and 1010 may be formed to pass through the first surface 211 and the second surface 212 of the first housing 210.

According to an embodiment, the through-hole 810 and 1010 may include a first hole 1011 that is formed to be inclined to pass through the second surface 212 of the first housing 210, and a second hole 1012 that is connected to the first hole 1011 and passes through the side surface 213 of the first housing 210.

According to an embodiment, the electronic device may further include a plurality of speaker holes 1020 that pass through the side surface of the first housing 210, and the through-hole 1010 may be disposed adjacent to at least one of the plurality of speaker holes 1020.

According to an embodiment, the electronic device may further include a bonding member 1210 that is disposed in the through-hole 810 and 1010 and has a curing speed faster than that of the third waterproof member.

According to an embodiment, the third waterproof member 430 may include one surface that contacts the bonding member 1210, and an opposite surface that contacts the first waterproof member 410 and the second waterproof member 420.

According to an embodiment, the electronic device may further include a decorative member 141 that is disposed to surround a periphery of the first display 240 between the first display 240 and the first housing 210, and is disposed to cover at least a portion of the through-hole 810.

According to an embodiment, the through-hole 810 may be connected to an accommodation space 820, in which the decorative member 141 is accommodated.

According to an embodiment, the electronic device may further include a second through-hole 1410 that passes through a portion of the first housing 210 disposed between the third waterproof member 430 and the first display 240, and is connected to the through-hole 810 and 1010.

According to an embodiment, a central axis of the second through-hole 1410 may be disposed in parallel to the side surface 213 of the first housing 210.

According to an embodiment, the first display 240 may include a first display panel 1623, and at least one plate member 1610 and 1601 that is disposed between the first display panel 1623 and the first housing 210, and is formed of an opaque material.

According to an embodiment, the at least one first plate member 1610 and 1601 may further include a passage hole 1640 that overlaps the second through-hole 1410, when the first display 240 is viewed from a top (when viewed from the z-axis or -z-axis direction).

According to an embodiment, the electronic device may further include a hinge structure 202 that connects the first housing 210 and the second housing 220, and the at least one plate member 1610 and 1601 may further include a first metal sheet 1610 that includes a plurality of openings 1614 in an area corresponding to the hinge structure 202, and a second metal sheet 1601 that is disposed between the first metal sheet 1610 and the first housing 210.

According to an embodiment, the passage hole 1641 formed in the first metal sheet 1610 may overlap the passage hole 1642 formed in the second metal sheet 1601, when the first display 240 is viewed from a top (or when viewed from the z-axis or -z-axis direction).

According to an embodiment, the second display 340 may further include a second display panel 330, and a window 280 that includes a transparent area 281 and an opaque area 282, and is disposed on a front surface of the second display panel 330.

According to an embodiment, at least a portion of the second waterproof member 420 may overlap the transparent area 281, with the second display panel 330 interposed therebetween, when the first display 240 is viewed from a top (or when viewed from the z-axis or -z-axis direction).

A foldable electronic device according to an embodiment disclosed in the disclosure may include a first housing 210 that includes a through-hole 810 and 1010, at least a portion of which is formed to be inclined, a second housing 220 that is rotatably connected to the first housing 210, a display 340 that is disposed in the first housing 210, and a waterproof structure 400 that is disposed between the first housing 210 and the display 340, wherein the waterproof structure 400 may include a first waterproof member 410 in a form of an open loop, a second waterproof member 420 in a form of an open loop that is disposed at an opened portion of the first waterproof member 410, and a third waterproof member 430 that is filled in the through-hole 810 and 1010 and connects the first waterproof member 410 and the second waterproof member 420.

According to an embodiment, the first housing 210 may include a side surface 213 that is formed between a first surface 211 that faces a first direction and a second surface 212 that faces a second direction opposite to the first direction, and at least a portion of the through-hole 810 and 1010 may be formed to be inclined toward the side surface 213 as going from the second surface 212 toward the first surface 211.

According to an embodiment, the through-hole 810 may be formed to pass through the first surface 211 and the second surface 212 of the first housing 210.

According to an embodiment, the through-hole 1010 may include a first hole 1011 that is formed to be inclined to pass through the second surface 212 of the first housing 210, and a second hole 1012 that is connected to the first hole 1011 and passes through the side surface 213 of the first housing 210.

According to an embodiment, the electronic device may further include a bonding member 1210 that is disposed in the through-hole 810 and 1010 and has a curing speed faster than that of the third waterproof member 430.

An electronic device according to an embodiment disclosed in the disclosure may include a housing 210 that includes a through-hole 810 and 1010, at least a portion of which is formed to be inclined, a display 340 that is disposed in the housing 210, and a waterproof structure 400 that is disposed between the housing 210 and the display 340, wherein the waterproof structure 400 may include a first waterproof member 410 in a form of an open loop, a second waterproof member 420 in a form of an open loop that is disposed at an opened portion of the first waterproof member 410, and a third waterproof member 430 that is filled in the through-hole 810 and 1010 and connects the first waterproof member 410 and the second waterproof member 420.

An embodiment of disclosure and terms used herein is not intended to limit the technologies described in the present disclosure to specific embodiments, and it should be understood that the embodiments and the terms include modification, equivalent, and/or alternative on the corresponding embodiment described herein. With regard to the description of drawings, similar components may be marked by similar reference marks/numerals. The terms of a singular form may include plural forms unless otherwise specified. In the disclosure, the expressions "A or B", "at least one of A and/or B", "A, B, or C", or "at least one of A, B, and/or C", and the like used herein may include any and all combinations of one or more of the associated listed items. Expressions such as "first," or "second," and the like, may express their components regardless of their priority or importance and may be used to distinguish one component from another component but is not limited to these components. When a certain component (e.g., a first component) is referred to as being "connected" or "coupled" (functionally or communicatively) to another component (e.g., a second component), it should be understood that the certain component may be directly connected to the other component or may be connected to the other component through another component (e.g., a third component).

According to the situation, the expression "adapted to or configured to" used herein may be interchangeably used as, for example, the expression "suitable for", "having the capacity to", "changed to", "made to", "capable of" or "designed to". The expression "a device configured to" may mean that the device is "capable of" operating together with another device or other parts. For example, a "processor configured to (or set to) perform A, B, and C" may mean a dedicated processor (e.g., an embedded processor) for performing corresponding operations or a generic-purpose processor (e.g., a central processing unit (CPU) or an AP) which performs corresponding operations by executing one or more software programs which are stored in a memory device (e.g., the memory 130).

The term "module" used herein may include a unit, which is implemented with hardware, software, or firmware, and may be interchangeably used with the terms "logic", "logical block", "part", "circuit", or the like. The "module" may be an integrated component, a minimum unit for performing one or more functions, or a part thereof. The "module" may be implemented mechanically or electronically. For example, the module may include a well-known or to-be-developed application-specific integrated circuit (ASIC) chip, field-programmable gate arrays (FPGAs), or programmable logic device that perform any operations.

According to an embodiment, at least part of a device (e.g., modules or functions thereof) or a method (e.g., operations) may be, for example, implemented by instructions stored in a computer-readable storage media (e.g., a memory) in the form of a program module. The instruction, when executed by a processor (e.g., a processor), may cause the processor to perform a function corresponding to the instruction. The computer-readable recording medium may include a hard disk, a floppy disk, a magnetic media (e.g., a magnetic tape), an optical medium (e.g., a compact disc read only memory (CD-ROM) and a digital versatile disc (DVD), a magneto-optical media (e.g., a floptical disk)), an embedded memory, or the like. The one or more instructions may contain a code made by a compiler or a code executable by an interpreter.

Each element (e.g., a module or a program module) according to an embodiment may be composed of single entity or a plurality of entities, a part of the above-described sub-elements may be omitted or may further include other elements. Alternatively or additionally, some components (e.g., a module or a program module) may be combined with each other so as to form one entity, so that the functions of the components may be performed in the same manner as before the combination. According to an embodiment, operations executed by modules, program modules, or other components may be executed by a successive method, a parallel method, a repeated method, or a heuristic method. Alternatively, at least some of the operations may be executed in another order or may be omitted, or any other operation may be added.

## Claims

1. A foldable electronic device comprising:
a first housing (210) including a through-hole (810, 1010) formed such that at least a portion thereof is inclined;
a second housing (220) rotatably connected to the first housing (210);
a first display (240) disposed on a first surface (211) of the first housing (210);
a second display (340) disposed on a second surface (212) of the first housing (210);
a first waterproof member (410) disposed between the second surface (212) of the first housing (210) and the second display (340), and overlapping at least a portion of the through-hole (810, 1010);
a second waterproof member (420) disposed between the second surface (212) of the first housing (210) and the second display (340) to be spaced apart from the first waterproof member (410), and overlapping at least a portion of the through-hole (810, 1010); and
a third waterproof member (430) filled in the through-hole (810, 1010) to connect the first waterproof member (410) and the second waterproof member (420).

2. The foldable electronic device of claim 1, wherein at least a portion of any one of the first waterproof member (410) and the second waterproof member (420) overlaps the first display (240) while the first housing (210) is interposed therebetween.

3. The foldable electronic device of claim 1, wherein the first housing (210) includes a side surface (213) formed between the first surface (211) facing a first direction and the second surface (212) facing a second direction opposite to the first direction, and
wherein at least a portion of the through-hole (810, 1010) is formed to be inclined toward the side surface (213) as going from the second surface (212) toward the first surface (211).

4. The foldable electronic device of claim 3, wherein a central axis of the through-hole (810, 1010) forms an acute angle with the side surface (213) of the first housing (210).

5. The foldable electronic device of claim 3, wherein the through-hole (810, 1010) is formed to pass through the first surface (211) and the second surface (212) of the first housing (210).

6. The foldable electronic device of claim 3, wherein the through-hole (810, 1010) includes:
a first hole (1011) formed to be inclined to pass through the second surface (212) of the first housing (210); and
a second hole (1012) connected to the first hole (1011) to pass through the side surface (213) of the first housing (210).

7. The foldable electronic device of claim 6, further comprising:
a plurality of speaker holes (1020) passing through the side surface of the first housing (210),
wherein the through-hole (1010) is disposed adjacent to at least any one of the plurality of speaker holes (1020).

8. The foldable electronic device of claim 1, further comprising:
a bonding member (1210) disposed in the through-hole (810, 1010) and having a curing speed faster than that of the third waterproof member,
wherein the third waterproof member (430) includes:
one surface contacting the bonding member (1210);
an opposite surface contacting the first waterproof member (410) and the second waterproof member (420).

9. The foldable electronic device of claim 1, further comprising:
a decorative member (141) disposed to surround a periphery of the first display (240) between the first display (240) and the first housing (210), and disposed to cover at least a portion of the through-hole (810).

10. The foldable electronic device of claim 9, wherein the through-hole (810) is connected to an accommodation space (820), in which the decorative member (141) is accommodated.

11. The foldable electronic device of claim 1, further comprising:
a second through-hole (1410) passing through a portion of the first housing (210) disposed between the third waterproof member (430) and the first display (240), and connected to the through-hole (810, 1010).

12. The foldable electronic device of claim 11, wherein a central axis of the second through-hole (1410) is disposed in parallel to the side surface (213) of the first housing (210).

13. The foldable electronic device of claim 11, wherein the first display (240) includes:
a first display panel (1623); and
at least one plate member (1610, 1601) disposed between the first display panel and the first housing, and formed of an opaque material, and
wherein the at least one plate member (1610, 1601) further includes a passage hole (1640) overlapping the second through-hole (1410).

14. The foldable electronic device of claim 13, further comprising:
a hinge structure (202) connecting the first housing (210) and the second housing (220),
wherein the at least one plate member (1610, 1601) further includes:
a first metal sheet (1610) including a plurality of openings (1614) in an area corresponding to the hinge structure (202); and
a second metal sheet (1601) disposed between the first metal sheet (1610) and the first housing (210), and
wherein the passage hole (1641) formed in the first metal sheet (1610) overlaps the passage hole (1642) formed in the second metal sheet (1601).

15. The foldable electronic device of claim 1, wherein the second display (340) further includes:
a second display panel (330); and
a window (280) including a transparent area (281) and an opaque area (282), and disposed on a front surface of the second display panel (330),
wherein at least a portion of the second waterproof member (420) overlaps the transparent area (281) with the second display panel (330) interposed therebetween.
